# EUROPÄISCHE PATENTSCHRIFT

(11) **EP 0 771 830 B1**
(45) Veröffentlichungstag und Bekanntmachung des Hinweises auf die Patenterteilung: **29.01.2003**
(21) Anmeldenummer: 96810707.8
(22) Anmeldetag: 24.10.1996
(51) Int. Cl.: C08G 61/08, C08L 65/00, C08K 13/02, C08K 5/54, C08K 9/06

(54) **Härtbare Zusammensetzung enthaltend Cycloolefin, Silan und Füllstoff**
Curable composition containing cycloolefins, silane and filler
Composition durcissable contenant des cyclooléfines, silane et une charge minérale

(30) Priorität: 02.11.1995 CH 310895
(43) Veröffentlichungstag der Anmeldung: 07.05.1997
(73) Patentinhaber: Ciba Specialty Chemicals Holding Inc., 4057 Basel (CH)
(72) Erfinder: Setiabudi, Frans, 79427 Eschbach (DE)

(56) Entgegenhaltungen:
- EP-A- 0 349 855
- WO-A-96/16100
- WO-A-96/20235
- US-A- 5 071 701

## Beschreibung

Die vorliegende Erfindung betrifft eine Zusammensetzung enthaltend ein gespanntes Cycloolefin, einen ROMP-Katalysator, einen Füllstoff und ein Silan; ein Verfahren zur Herstellung eines Metathesepolymerisats aus dieser Zusammensetzung sowie die Verwendung dieser Zusammensetzung als Umhüllungsmaterial für elektrische oder elektronische Bauteile.

Bei der Herstellung von elektrischen und elektronischen Bauteilen werden oft gefüllte Epoxidharz-Systeme als Umhüllungsmaterialien verwendet. Solche Epoxidharz-Vergussmassen, wie sie beispielsweise in der EP-A-348 193 oder der EP-A-540 467 offenbart werden, weisen jedoch Nachteile in Bezug auf Zähigkeit und Wärmestabilität auf.

Aufgrund der guten mechanischen und elektrischen Eigenschaften sollten Cycloolefine, die mittels ringöffnender Metathese-Polymerisation (ROMP) polymerisiert werden können, grundsätzlich für Elektroanwendungen geeignet sein. Solche Systeme werden beispielsweise in WO 96/16100, WO 96/20235 oder in der EP-A-348 852 beschrieben.
Der Zusatz von Füllstoffen bewirkt bei diesen Materialien jedoch eine starke Verschlechterung der mechanischen und elektrischen Eigenschaften.

EP-A-0 349 855 beschreibt einen Forrnkörper aus Füllstoffen und Polymeren, die durch eine Metathesisreaktion erhalten wurden. Das Katalysatorsystem besteht aus zwei Komponenten; zu einen aus Wolfram-, Molybdän-, Rhenium- oder Tantalhalogeniden und zum anderen aus einem organometallischen Aktivator wie beispielsweise Tri-n-octylaluminium.

Es wurde nun gefunden, dass durch Einsatz eines Katalysatorkomplexes wie im folgenden beschrieben und durch Zusatz von spezifischen Silanen zu gefüllten Cycloolefinsystemen eine wesentliche Verbesserung der mechanischen und elektrischen Eigenschaften, insbesondere der Zähigkeit, der Wärmestabilität und des dielektrischen Verlustfaktors, erzielt werden kann.

Gegenstand der vorliegenden Erfindung ist eine Zusammensetzung enthaltend
(a) mindestens ein gespanntes Cycloolefin,
(b) einen Katalysator für die ringöffnende Metathese-Polymerisation der Formel III

   (R₂₉R₃₀R₃₁P)ₓL_{y}Me²⁺Z₁⁻Z₂⁻ (III),

   worin R₂₉, R₃₀ und R₃₁ unabhängig voneinander H, C₁-C₂₀-Alkyl, C₁-C₂₀-Alkoxy, unsubstituiertes oder mit C₁-C₆-Alkyl, C₁-C₆-Halogenalkyl oder C₁-C₆-Alkoxy substituiertes C₄-C₁₂-Cycloalkyl oder Cycloalkoxy, oder unsubstituiertes oder mit C₁-C₆-Alkyl, C₁-C₆-Halogenalkyl oder C₁-C₆-Alkoxy substituiertes C₆-C₁₆-Aryl oder C₆-C₁₆-Aryloxy, oder unsubstituiertes oder mit C₁-C₆-Alkyl, C₁-C₆-Halogenalkyl oder C₁-C₆-Alkoxy substituiertes C₇-C₁₆-Aralkyl oder C₇-C₁₆-Aralkyloxy darstellt; die Reste R₃₀ und R₃₁ gemeinsam unsubstituiertes oder mit C₁-C₆-Alkyl, C₁-C₆-Halogenalkyl oder C₁-C₆-Alkoxy substituiertes Tetra- oder Pentamethylen, oder Tetra- oder Pentamethylendioxyl bedeuten, oder unsubstituiertes oder mit C₁-C₆-Alkyl, C₁-C₆-Halogenalkyl oder C₁-C₆-Alkoxy substituiertes und mit 1 oder 2 1,2-Phenylen kondensiertes Tetra- oder Pentamethylen, oder Tetra- oder Pentamethylendioxyl darstellen, oder unsubstitulertes oder mit C₁-C₆-Alkyl, C₁-C₆-Halogenalkyl oder C₁-C₆-Alkoxy substituiertes und in den 1,2- und 3,4-Stellungen mit 1,2-Phenylen kondensiertes Tetramethylendioxyl darstellen, und R₃₁ die zuvor angebene Bedeutung hat;
   L einen Neutralliganden bedeutet, Me für Ru oder Os steht, Z₁⁻ und Z₂⁻ je ein einfach geladenes Anion oder Z₁⁻ und Z₂⁻ zusammen ein zweifach geladenes Anion darstellen,
   x eine Zahl von 1 bis 3 und y eine Zahl von 0 bis 3 darstellen, wobei gilt 2 ≤ x+y ≤ 4.
(c) einen Füllstoff und
(d) ein Silan der Formel I 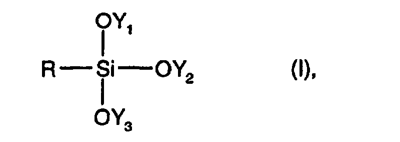
worin R für eine einwertige organische Gruppe mit 2 bis 100 C-Atomen steht, wobei ein oder mehrere -Atome durch O-, S-, N- oder Si-Atome ersetzt sein können und Y₁, Y₂ und Y₃ unabhängig voneinander C₁-C₂₀-Alkyl, C₅-C₂₀-Aryl, C₆-C₂₀-Aralkyl, C₅-C₁₂-Cycloalkyl, C₂-C₂₀-Alkoxyalkyl oder C₁-C₂₀-Acyl bedeuten.

Unter gespannten Cycloolefinen sind im Rahmen der vorliegenden Erfindung alle Cycloolefine mit Ausnahme des Cyclohexens und seiner Derivate, die nicht mit der ringöffnenden Metathese polymerisiert werden können, zu verstehen.

Bei den gespannten Cycloolefinen kann es sich um monocyclische oder polycyclische kondensierte bzw. überbrückte Ringsysteme, zum Beispiel mit zwei bis vier Ringen, handeln, die unsubstituiert oder substituiert sind und Heteroatome, wie zum Beispiel O, S, N oder Si, in einem oder mehreren Ringen und/oder kondensierte aromatische oder heteroaromatische Ringe, wie zum Beispiel o-Phenylen, o-Naphthylen, o-Pyridinylen oder o-Pyrimidinylen, enthalten können. Die einzelnen cyclischen Ringe können 3 bis 16, bevorzugt 3 bis 12 und besonders bevorzugt 3 bis 8 Ringglieder enthalten. Die gespannten Cycloolefine können weitere nichtaromatische Doppelbindungen enthalten, je nach Ringgrösse bevorzugt 2 bis 4 solcher zusätzlicher Doppelbindungen. Die Ringsubstituenten sind inert, d.h. diese Substituenten beeinträchtigen die chemische Stabilität und die Thermostabilität der ROMP-Katalysatoren nicht.

Wenn die gespannten Cycloolefine mehr als eine Doppelbindung enthalten, zum Beispiel 2 bis 4 Doppelbindungen, können sich abhängig von den Reaktionsbedingungen, dem gewählten Monomer und der Katalysatormenge, auch vernetzte Polymerisate bilden.

Vorzugsweise wird in der erfindungsgemässen Zusammensetzung als Komponente (a) eine Verbindung der Formel II verwendet 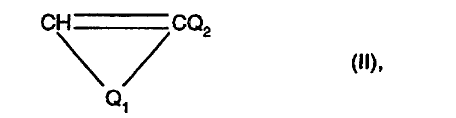 worin Q₁ ein Rest mit mindestens einem Kohlenstoffatom ist, der zusammen mit der -CH=CQ₂-Gruppe einen mindestens 3-gliedrigen alicyclischen Ring bildet, welcher ein oder mehrere Heteroatome ausgewählt aus der Gruppe Silicium, Phosphor, Sauerstoff, Stickstoff oder Schwefel enthalten kann, und welcher unsubstituiert oder mit Halogen, =O, -CN, -NO₂, R₁R₂R₃Si-(O)ᵤ-, -COOM, -SO₃M, -PO₃M, -COO(M₁)_{1/2}, -SO₃(M₁)_{1/2}, -PO₃(M₁)_{1/2}, C₁-C₂₀-Alkyl, C₁-C₂₀-Hydroxyalkyl, C₁-C₂₀-Halogenalkyl, C₁-C₆-Cyanoalkyl, C₃-C₈-Cycloalkyl, C₆-C₁₆-Aryl, C₇-C₁₆-Aralkyl, C₃-C₆-Heterocycloalkyl, C₃-C₁₆-Heteroaryl, C₄-C₁₆-Heteroaralkyl oder R₄-X-substituiert ist; oder bei welchem zwei benachbarte C-Atome durch -CO-O-CO- oder -CO-NR₅-CO- verbunden sind; oder bei welchem an benachbarten Kohlenstoffatomen des alicyclischen Rings ein alicyclischer, aromatischer oder heteroaromatischer Ring ankondensiert ist, welcher unsubstituiert oder mit Halogen, -CN, -NO₂, R₆R₇R₈Si-(O)ᵤ-, -COOM, -SO₃M, -PO₃M, -COO(M₁)_{1/2}, -SO₃(M₁)_{1/2}, -PO₃(M₁)_{1/2}, C₁-C₂₀-Alkyl, C₁-C₂₀-Halogenalkyl, C₁-C₂₀-Hydroxyalkyl, C₁-C₆-Cyanoalkyl, C₃-C₈-Cycloalkyl, C₆-C₁₆-Aryl, C₇-C₁₆-Aralkyl, C₃-C₆-Heterocycloalkyl, C₃-C₁₆-Heteroaryl, C₄-C₁₆-Heteroaralkyl oder R₁₃-X₁-substituiert ist; X und X₁ unabhängig voneinander für -O-, -S-, -CO-, -SO-, -SO₂-, -O-CO-, -COO-, -CO-NR₅-, -NR₁₀-CO-, -SO₂-O- oder -O-SO₂- stehen; R₁, R₂ und R₃ unabhängig voneinander C₁-C₁₂-Alkyl, C₁-C₁₂-Perfluoralkyl, Phenyl oder Benzyl bedeuten; R₄ und R₁₃ unabhängig voneinander C₁-C₂₀-Alkyl, C₁-C₂₀-Halogenalkyl, C₁-C₂₀-Hydroxyalkyl, C₃-C₈-Cycloalkyl, C₆-C₁₆-Aryl, C₇-C₁₆-Aralkyl bedeuten; R₅ und R₁₀ unabhängig voneinander Wasserstoff, C₁-C₁₂-Alkyl, Phenyl oder Benzyl bedeuten, wobei die Alkylgruppen ihrerseits unsubstituiert oder mit C₁-C₁₂-Alkoxy oder C₃-C₈-Cycloalkyl substituiert sind; R₆, R₇ und R₈ unabhängig voneinander C₁-C₁₂-Alkyl, C₁-C₁₂-Perfluoralkyl, Phenyl oder Benzyl bedeuten; M für ein Alkalimetall und M₁ für ein Erdalkalimetall stehen; und u für 0 oder 1 steht; wobei der mit Q₁ gebildete alicyclische Ring weitere nicht-aromatische Doppelbindungen enthalten kann;
Q₂ Wasserstoff, C₁-C₂₀-Alkyl, C₁-C₂₀-Halogenalkyl, C₁-C₁₂-Alkoxy, Halogen, -CN, R₁₁-X₂-darstellt; R₁₁ C₁-C₂₀-Alkyl, C₁-C₂₀-Halogenalkyl, C₁-C₂₀-Hydroxyalkyl, C₃-C₈-Cycloalkyl, C₆-C₁₆-Aryl oder C₇-C₁₆-Aralkyl bedeutet; X₂ -COO- oder -CO-NR₁₂- ist; R₁₂ Wasserstoff, C₁-C₁₂-Alkyl, Phenyl oder Benzyl darstellt;
wobei die vorgenannten Cycloalkyl-, Heterocycloalkyl-, Aryl-, Heteroaryl-, Aralkyl- und Heteroaralkylgruppen unsubstituiert oder mit C₁-C₁₂-Alkyl, C₁-C₁₂-Alkoxy, -NO₂, -CN oder Halogen substituiert sind, und wobei die Heteroatome der vorgenannten Heterocycloalkyl-, Heteroaryl- und Heteroaralkylgruppen aus der Gruppe -O-, -S-, -NR₉- und -N= ausgewählt sind; und R₉ Wasserstoff, C₁-C₁₂-Alkyl, Phenyl oder Benzyl darstellt.

Ankondensierte alicyclische Ringe enthalten bevorzugt 3 bis 8, besonders bevorzugt 4 bis 7 und insbesondere bevorzugt 5 oder 6 Ring-C-Atome.

Die erfindungsgemässe Zusammensetzung kann zur Vernetzung oder zur Regelung des Molekulargewichts weitere zur Metathese fähige Olefine enthalten, zweckmässig in Mengen bis zu 40 mol-%, bevorzugt 0,01 bis 30 mol-% und besonders bevorzugt 0,1 bis 20 mol-%, bezogen auf die Gesamtmenge der vorhandenen Cycloolefine und Olefine.

Geeignete zur Metathese fähige Olefine sind beispielsweise Cyclooctadien, Cyclooctatrien, Norbonadien oder Acetylnorbornen. Femer sind auch Verbindungen wie 2-Buten-1,4-diol, wie in Feast, W.J., Harrison, B, J. Mol. Catal. 65, 63 (1991) beschrieben, oder 1-Hexen (Umlagerungen) geeignet.

Ist in den Verbindungen der Formel II ein asymmetrisches Zentrum vorhanden, so hat dies zur Folge, daß die Verbindungen in optisch isomeren Formen auftreten können. Einige Verbindungen der Formel II können in tautomeren Formen (z.B. Keto-Enol-Tautomerie) vorkommen. Liegt eine aliphatische C=C-Doppelbindung vor, so kann auch geometrische Isomerie (E-Form oder Z-Form) auftreten. Femer sind auch Exo-Endo-Konfigurationen möglich. Die Formel II umfaßt somit alle möglichen Stereoisomeren, die in Form von Enantiomeren, Tautomeren, Diastereomeren, E/Z-lsomeren oder Gemischen davon vorliegen.

In den Definitionen der Substituenten können die Alkyl-, Alkenyl- und Alkinylgruppen geradkettig oder verzweigt sein. Dasselbe gilt auch für den bzw. jeden Alkylteil von Alkoxy-, Alkylthio-, Alkoxycarbonyl- und von weiteren Alkyl enthaltenden Gruppen. Diese Alkylgruppen enthalten bevorzugt 1 bis 12, besonders bevorzugt 1 bis 8 und insbesondere bevorzugt 1 bis 4 C-Atome. Diese Alkenyl- und Alkinylgruppen enthalten bevorzugt 2 bis 12, besonders bevorzugt 2 bis 8 und insbesondere bevorzugt 2 bis 4 C-Atome.

Alkyl umfaßt beispielsweise Methyl, Ethyl, Isopropyl, n-Propyl, n-Butyl, Isobutyl, sek.-Butyl, tert.-Butyl sowie die verschiedenen isomeren Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl-, Octadecyl-, Nonadecyl- und Eicosylgruppen.

Hydroxyalkyl umfaßt beispielsweise Hydroxymethyl, Hydroxyethyl, . Hydroxyisopropyl, 1-Hydroxy-n-propyl, 2-Hydroxy-n-butyl, 1-Hydroxyisobutyl, 1-Hydroxy-sek.-butyl, 1-Hydroxytert.-butyl sowie die verschiedenen hydroxylsubstituierten isomeren Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl-, Octadecyl-, Nonadecyl- und Eicosylgruppen.

Halogenalkyl umfaßt beispielsweise Fluormethyl, Difluormethyl, Trifluormethyl, Chlormethyl, Dichlormethyl, Trichlormethyl, 2,2,2-Trifluorethyl, 2-Fluorethyl, 2-Chlorethyl, 2,2,2-Trichlorethyl sowie halogenierte, besonders fluorierte oder chlorierte Isopropyl-, n-Propyl-, n-Butyl-, Isobutyl-, sek.-Butyl-und tert.-Butylgruppen sowie die verschiedenen isomeren halogenierten Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl-, Octadecyl-, Nonadecyl- und Eicosylgruppen.

Alkenyl umfaßt zum Beispiel Propenyl, Isopropenyl, 2-Butenyl, 3-Butenyl, Isobutenyl, n-Penta-2,4-dienyl, 3-Methyl-but-2-enyl, n-Oct-2-enyl, n-Dodec-2-enyl, Isododecenyl, n-Octadec-2-enyl und n-Octadec-4-enyl.

Bei Cycloalkyl handelt es sich bevorzugt um C₅-C₈-Cycloalkyl, besonders um C₅- oder C₆-Cycloalkyl. Einige Beispiele sind Cyclopropyl, Dimethylcyclopropyl, Cyclobutyl, Cyclopentyl, Methylcyclopentyl, Cyclohexyl, Cycloheptyl und Cyclooctyl.

Cyanoalkyl umfaßt beispielsweise Cyanomethyl (Methylnitril), Cyanoethyl (Ethylnitril), 1-Cyanoisopropyl, 1-Cyano-n-propyl, 2-Cyano-n-butyl, 1-Cyanoisobutyl, 1-Cyano-sek.-butyl, 1-Cyano-tert.-butyl sowie die verschiedenen isomeren Cyanopentyl- und -hexylreste.

Aralkyl enthält bevorzugt 7 bis 12 C-Atome und besonders bevorzugt 7 bis 10 C-Atome. Es kann sich zum Beispiel um Benzyl, Phenethyl, 3-Phenylpropyl, α-Methylbenzyl, 4-Phenylbutyl und α,α-Dimethylbenzyl handeln.

Aryl enthält bevorzugt 6 bis 10 C-Atome. Es kann sich beispielsweise um Phenyl, Pentalinyl, Indenyl, Naphtyl, Azulinyl und Anthryl handeln.

Heteroaryl enthält bevorzugt 4 oder 5 C-Atome und ein oder zwei Heteroatome aus der Gruppe O, S und N. Es kann sich beispielsweise um Pyrrolyl, Furanyl, Thiophenyl, Oxazolyl, Thiazolyl, Pyridyl, Pyrazinyl, Pyrimidinyl, Pyridazinyl, Indolyl, Purinyl und Chinolyl handeln.

Heterocycloalkyl enthält bevorzugt 4 oder 5 C-Atome und ein oder zwei Heteroatome aus der Gruppe O, S und N. Es kann sich beispielsweise um Oxiranyl, Azirinyl, 1,2-Oxathiolanyl, Pyrazolinyl, Pyrrolidinyl, Piperidyl, Piperazyl, Morpholinyl, Tetrahydrofuranyl und Tetrahydrothiophenyl handeln.

Alkoxy ist beispielsweise Methoxy, Ethoxy, Propyloxy, Isopropyloxy, n-Butyloxy, Isobutyloxy, sek.-Butyloxy und tert.-Butyloxy.

Unter Alkalimetall ist im Rahmen der vorliegenden Erfindung Lithium, Natrium, Kalium, Rubidium und Cäsium, insbesondere Lithium, Natrium und Kalium zu verstehen.

Unter Erdalkalimetall ist im Rahmen der vorliegenden Erfindung Beryllium, Magnesium, Calcium, Strontium und Barium, insbesondere Magnesium und Calcium zu verstehen.

In den obigen Definitionen ist unter Halogen Fluor, Chlor, Brom und Jod ,vorzugsweise Fluor, Chlor und Brom, zu verstehen.

In der erfindungsgemäßen Zusammensetzung besonders gut geeignete Verbindungen der Formel II sind jene, worin Q₂ Wasserstoff bedeutet.

Weiterhin bevorzugt sind Verbindungen der Formel II, worin Q₁ ein Rest mit mindestens einem Kohlenstoffatom ist, der zusammen mit der -CH=CQ₂-Gruppe einen 3- bis 10-gliedrigen alicyclischen Ring bildet, der ein Heteroatom ausgewählt aus der Gruppe Silicium, Sauerstoff, Stickstoff und Schwefel enthalten kann, und der unsubstituiert oder mit Halogen, -CN, -NO₂, R₁R₂R₃Si-, -COOM, -SO₃M, -PO₃M, -COO(M₁)_{1/2}, -SO₃(M₁)_{1/2}, -PO₃(M₁)_{1/2}, C₁-C₆-Alkyl, C₁-C₆-Halogenalkyl, C₁-C₆-Hydroxyalkyl, C₁-C₄-Cyanoalkyl, C₃-C₆-Cycloalkyl, Phenyl, Benzyl oder R₄-X- substituiert ist; oder bei dem an benachbarten Kohlenstoffatomen ein aromatischer oder heteroaromatischer oder alicyclischer Ring ankondensiert sein kann, welcher unsubstituiert oder durch Halogen, -CN, -NO₂, R₆R₇R₈Si-, -COOM, -SO₃M, -PO₃M, -COO(M₁)_{1/2}, SO₃(M₁)_{1/2}, PO₃(M₁)_{1/2}, C₁-C₆-Alkyl, C₁-C₆-Halogenalkyl, C₁-C₆-Hydroxyalkyl, C₁-C₄-Cyanoalkyl, C₃-C₆-Cycloalkyl, Phenyl, Benzyl oder R₁₃-X₁- substituiert ist; R₁, R₂ und R₃ unabhängig voneinander C₁-C₄-Alkyl, C₁-C₄-Perfluoralkyl, Phenyl oder Benzyl bedeuten; M für ein Alkalimetall und M₁ für ein Erdalkalimetall stehen; R₄ und R₁₃ unabhängig voneinander C₁-C₆-Alkyl, C₁-C₆-Halogenalkyl, C₁-C₆-Hydroxyalkyl oder C₃-C₆-Cycloalkyl bedeuten; X und X₁ unabhängig voneinander für -O-, -S-, -CO-, -SO- oder -SO₂- stehen und R₆, R₇ und R₈ unabhängig voneinander C₁-C₄-Alkyl, C₁-C₄-Perfluoralkyl, Phenyl oder Benzyl darstellen.

Norbornen und Norbomenderivate, insbesondere Dicyclopentadien und Dicyclopentadienderivate, sind besonders bevorzugt als Komponente (a).

Bevorzugte Norbornenderivate sind die Verbindungen der Formeln III, IV, V und VI 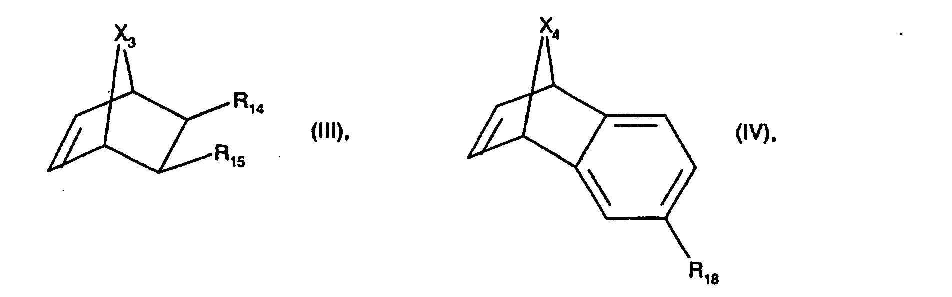 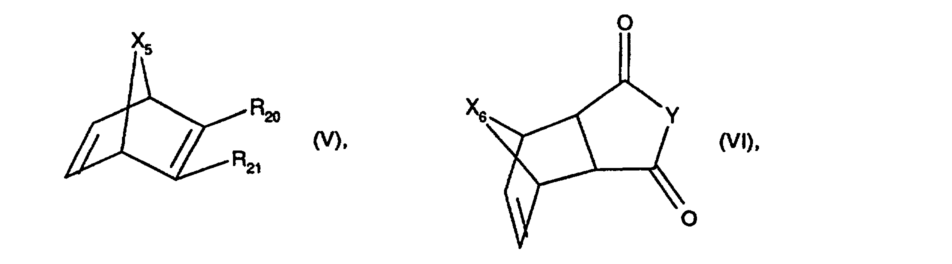 worin X₃ -CHR₁₆-, Sauerstoff oder Schwefel ist, R₁₄ und R₁₅ unabhängig voneinander Wasserstoff, -CN, Trifluormethyl, (CH₃)₃SiO-, (CH₃)₃Si- oder -COOR₁₇ bedeuten und R₁₆ und R₁₇ unabhängig voneinander Wasserstoff, C₁-C₁₂-Alkyl, Phenyl oder Benzyl darstellen;
X₄ -CHR₁₉-, Sauerstoff oder Schwefel ist, R₁₉ Wasserstoff, C₁-C₁₂-Alkyl, Phenyl oder Benzyl bedeutet und R₁₈ für Wasserstoff, C₁-C₆-Alkyl oder Halogen steht;
X₅ -CHR₂₂-, Sauerstoff oder Schwefel ist, R₂₂ Wasserstoff, C₁-C₁₂-Alkyl, Phenyl oder Benzyl bedeutet und R₂₀ und R₂₁ unabhängig voneinander Wasserstoff, CN, Trifluormethyl, (CH₃)₃SiO-, (CH₃)₃Si- oder-COOR₂₃ darstellen und R₂₃ für Wasserstoff, C₁-C₁₂-Alkyl, Phenyl oder Benzyl steht;
X₆ -CHR₂₄-, Sauerstoff oder Schwefel ist, R₂₄ Wasserstoff, C₁-C₁₂-Alkyl, Phenyl oder Benzyl bedeutet, Y Sauerstoff oder 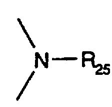 darstellt und R₂₅ für Wasserstoff, Methyl, Ethyl oder Phenyl steht.

Beispiele für geeignete Verbindungen der Formel II sind die folgenden Cycloolefine:

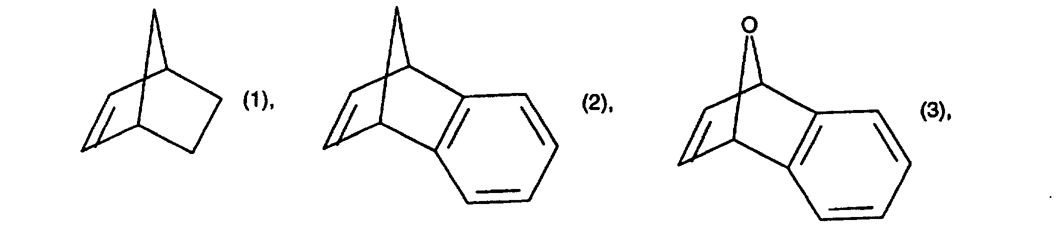

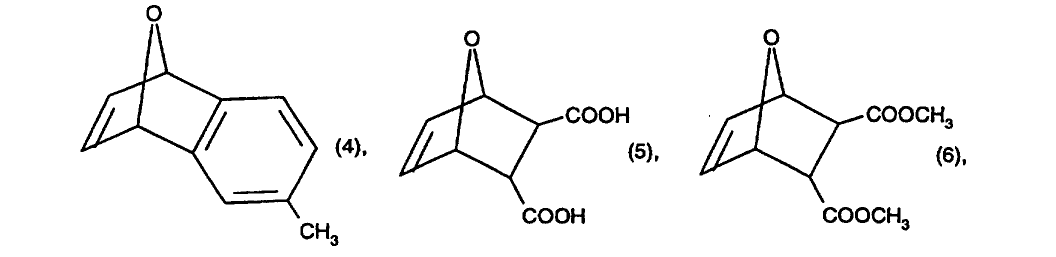

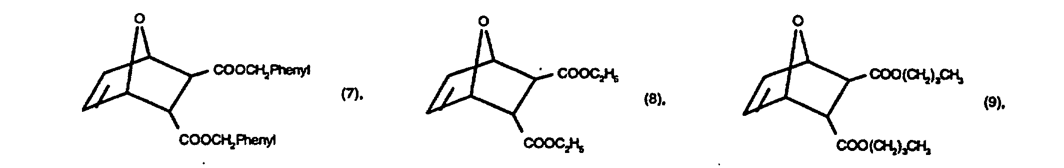

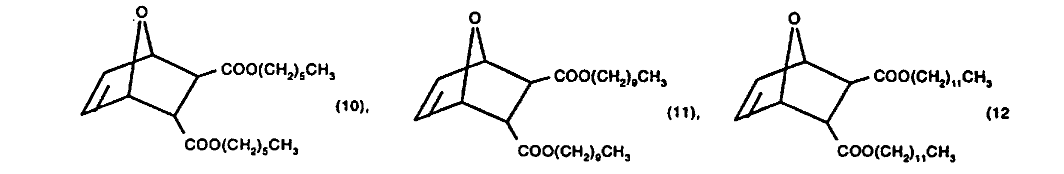

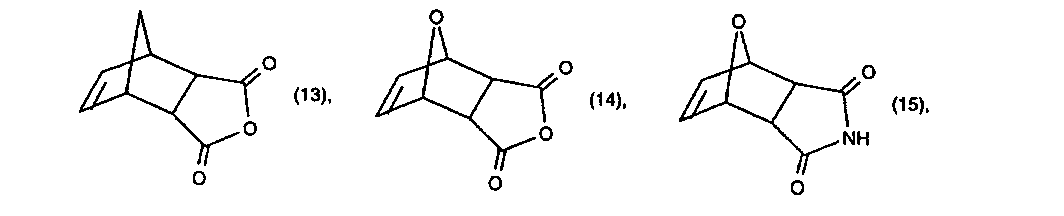

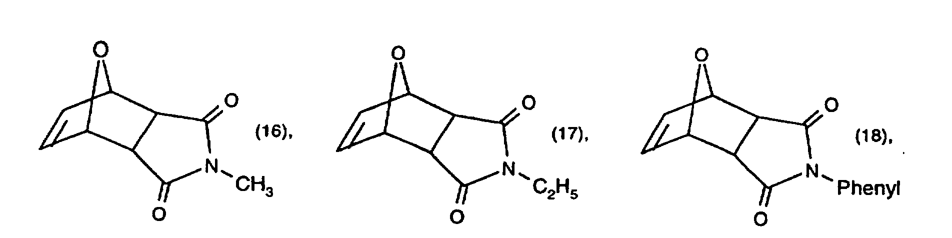

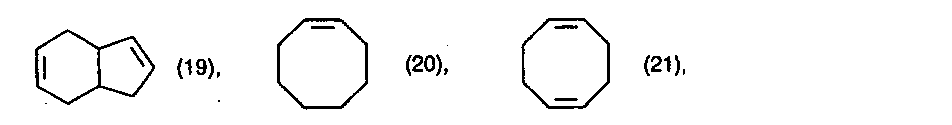

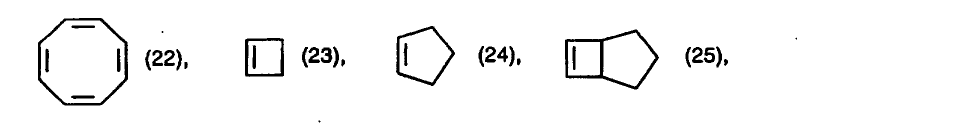

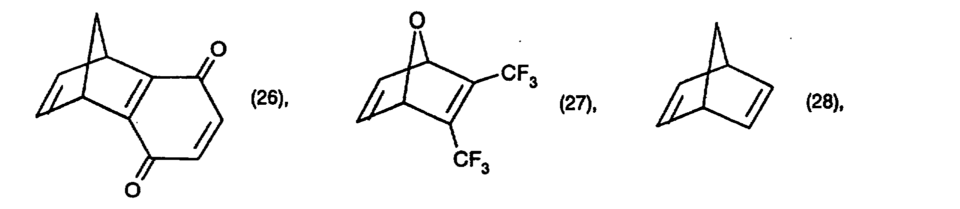

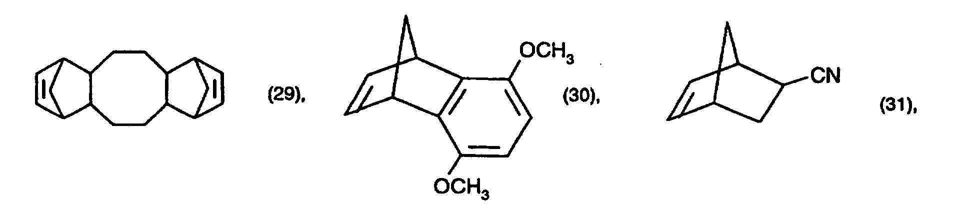

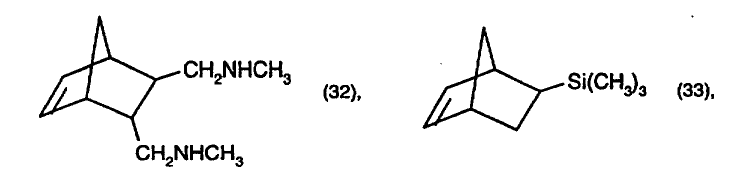

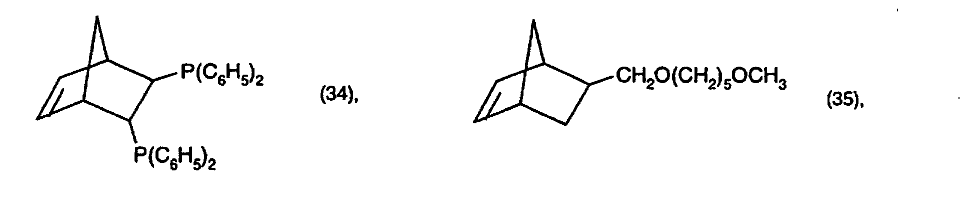

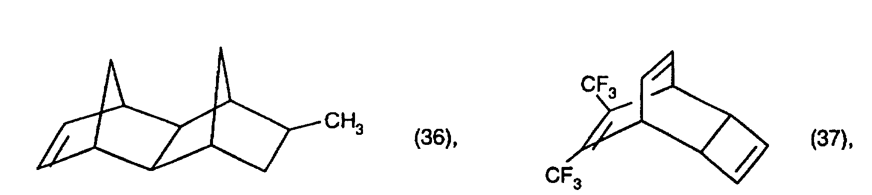

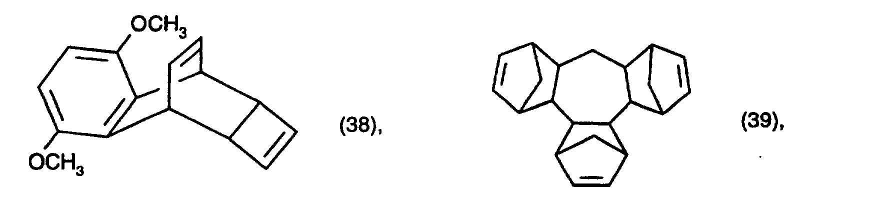

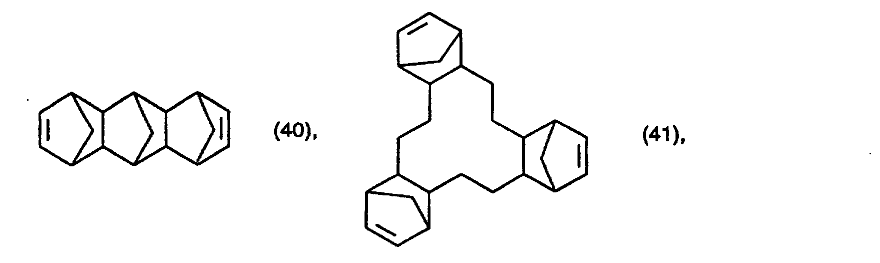

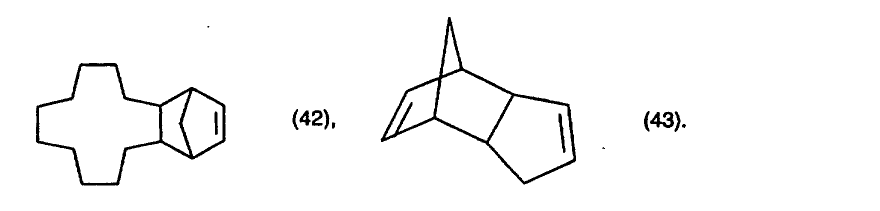

In einer bevorzugten Ausführungsform enthalten die gespannten Cycloolefine nur Kohlenstoff- und Wasserstoffatome, und vorzugsweise handelt es sich um 5- oder 6-gliedrige Ringe oder Ringsysteme mit einem bis drei 5- oder 6-gliedrigen Ringen, zum Beispiel um Norbomen, alkylierte Norbornene und Dicyclopentadien.

Besonders bevorzugt als Komponente (a) ist Dicyclopentadien.

Als Katalysatoren für die ringöffnende Metathese-Polymerisation (ROMP-Katalysatoren) ist dem Fachmann eine grosse Zahl von Verbindungen der Übergangsmetalle Titan, Vanadium, Molybdän, Wolfram, Rhenium, Iridium, Ruthenium und Osmium bekannt. Hierbei handelt es sich beispielsweise um komplexe Metallhalogenide, Metallo-Carbene oder Koordinations-Katalysatoren vom Ziegler-Natta-Typ. Alle diese bekannten ROMP-Katalysatoren können im Prinzip als Komponente (b) in den erfindungsgemässen Zusammensetzungen verwendet werden.

Vorzugsweise wird ein Ruthenium(+II)-Komplexsalz oder ein Osmium(+ll)-Komplexsalz, besonders bevorzugt ein Ruthenium(+ll)-Komplexsalz, als Komponente (b) verwendet.

Da die Füllstoffe gemäss Komponente (c) oft geringe Mengen Wasser enthalten, empfiehlt es sich feuchtigkeitsunempfindliche ROMP-Katalysatoren einzusetzen, wie z.B. die in WO 96/16100 und WO 96/20235 beschriebenen Ruthenium(+ll)-und Osmium(+II)-Komplexsalze.

Bevorzugt als Komponente (b) ist daher ein Komplexsalz der Formel III

(R₂₉R₃₀R₃₁P)ₓL_{y}Me²⁺Z₁⁻Z₂⁻ (III),

worin R₂₉, R₃₀ und R₃₁ unabhängig voneinander H, C₁-C₂₀-Alkyl, C₁-C₂₀-Alkoxy, unsubstituiertes oder mit C₁-C₆-Alkyl, C₁-C₆-Halogenalkyl oder C₁-C₆-Alkoxy substituiertes C₄-C₁₂-Cycloalkyl oder Cycloalkoxy, oder unsubstituiertes oder mit C₁-C₆-Alkyl, C₁-C₆-Halogenalkyl oder C₁-C₆-Alkoxy substituiertes C₆-C₁₆-Aryl oder C₆-C₁₆-Aryloxy, oder unsubstituiertes oder mit C₁-C₆-Alkyl, C₁-C₆-Halogenalkyl oder C₁-C₆-Alkoxy substituiertes C₇-C₁₆-Aralkyl oder C₇-C₁₆-Aralkyloxy darstellt; die Reste R₃₀ und R₃₁ gemeinsam unsubstituiertes oder mit C₁-C₆-Alkyl, C₁-C₆-Halogenalkyl oder C₁-C₆-Alkoxy substituiertes Tetra- oder Pentamethylen, oder Tetra- oder Pentamethylendioxyl bedeuten, oder unsubstituiertes oder mit C₁-C₆-Alkyl, C₁-C₆-Halogenalkyl oder C₁-C₆-Alkoxy substituiertes und mit 1 oder 2 1,2-Phenylen kondensiertes Tetra- oder Pentamethylen, oder Tetra- oder Pentamethylendioxyl darstellen, oder unsubstituiertes oder mit C₁-C₆-Alkyl, C₁-C₆-Halogenalkyl oder C₁-C₆-Alkoxy substituiertes und in den 1,2- und 3,4-Stellungen mit 1,2-Phenylen kondensiertes Tetramethylendioxyl darstellen, und R₃₁ die zuvor angebene Bedeutung hat;
L einen Neutralliganden bedeutet, Me für Ru oder Os steht, Z₁⁻ und Z₂⁻ je ein einfach geladenes Anion oder Z₁⁻ und Z₂⁻ zusammen ein zweifach geladenes Anion darstellen,
x eine Zahl von 1 bis 3 und y eine Zahl von 0 bis 3 darstellen, wobei gilt 2 ≤ x+y ≤ 4.

Die Liganden L können in den Verbindungen der Formel III gleich oder verschieden sein.

Die Ruthenium- und Osmiumverbindungen der Formel III sind bekannt oder nach bekannten Verfahren aus den Metallhalogeniden (zum Beispiel MeX₃ oder [MeArenX₂]₂ durch Reaktion mit Phosphinen der Formel IV

R₂₉R₃₀R₃₁P (IV),

worin R₂₉, R₃₀, und R₃₁ dieselbe Bedeutung wie in Formel (III) haben, und Ligandenbildnem herstellbar.

Bei den Resten R₂₉, R₃₀ und R₃₁ handelt es sich bevorzugt um gleiche Reste. Femer sind sterisch anspruchsvolle Reste bevorzugt, zum Beispiel verzweigtes, insbesondere α-verzweigtes, Alkyl oder Alkoxy oder cyclische Reste.

R₂₉, R₃₀ und R₃₁ kann als Alkyl linear oder verzweigt sein und bevorzugt 1 bis 12, besonders bevorzugt 1 bis 8, und ganz besonders bevorzugt 1 bis 6 C-Atome enthalten. Beispiele für Alkyl sind Methyl, Ethyl, n- und i-Propyl, n-, i- und t-Butyl, die Isomeren von Pentyl, Hexyl, Heptyl, Octyl, Nonyl, Decyl, Undecyl, Dodecyl, Tridecyl, Tetradecyl, Pentadecyl, Hexadecyl, Heptadecyl, Octadecyl und Eicosyl. Bevorzugte Beispiele sind Methyl, Ethyl, n- und i-Propyl, n-, i- und t-Butyl, 1-, 2- oder 3-Pentyl und 1-, 2-, 3- oder 4-Hexyl.

R₂₉, R₃₀ und R₃₁ kann als Alkoxy linear oder verzweigt sein und bevorzugt 1 bis 12, besonders bevorzugt 1 bis 8, und ganz besonders bevorzugt 1 bis 6 C-Atome enthalten. Beispiele für Alkoxy sind Methoxy, Ethoxy, n- und i-Propyloxy, n-, i- und t-Butyloxy, die Isomeren von Pentyloxy, Hexyloxy, Heptyloxy, Octyloxy, Nonyloxy, Decyloxy, Undecyloxy, Dodecyloxy, Tridecyloxy, Tetradecyloxy, Pentadecyloxy, Hexadecyloxy, Heptadecyloxy, Octadecyloxy und Eicosyloxy. Bevorzugte Beispiele sind Methoxy, Ethoxy, n- und i-Propyloxy, n-, i- und t-Butyloxy, 1-, 2- oder 3-Pentyloxy und 1-, 2-, 3- oder 4-Hexyloxy.

Sofern R₂₉, R₃₀ und R₃₁ substituiert sind, handelt es bei den Substituenten bevorzugt um C₁-C₄-Alkyl, C₁-C₄-Halogenalkyl oder C₁-C₄-Alkoxy. Halogen bedeutet bevorzugt Cl und besonders bevorzugt F. Beispiele für bevorzugte Substituenten sind Methyl, Methoxy, Ethyl, Ethoxy und Trifluormethyl. R₂₉, R₃₀ und R₃₁ sind bevorzugt mit 1 bis 3 Substituenten substituiert.

Bedeuten R₂₉, R₃₀ und R₃₁ Cycloalkyl, so handelt es sich bevorzugt um C₅-C₈-Cycloalkyl, und besonders bevorzugt um C₅- oder C₆-Cycloalkyl. Einige Beispiele sind Cyclobutyl, Cycloheptyl, Cyclooctyl und besonders Cyclopentyl und Cyclohexyl. Beispiele für substituiertes Cycloalkyl sind Methyl-, Dimethyl-, Trimethyl-, Methoxy-, Dimethoxy-, Trimethoxy-, Trifluormethyl-, Bistrifluormethyl- und Tristrifluormethylcyclopentyl und -cyclohexyl.

Bedeuten R₂₉, R₃₀ und R₃₁ Cycloalkyloxy, so handelt es sich bevorzugt um C₅-C₈-Cycloalkyloxy, und besonders bevorzugt um C₅- oder C₆-Cycloalkyloxy. Einige Beispiele sind Cyclobutyloxy, Cycloheptyloxy, Cyclooctyloxy und besonders Cyclopentyloxy und Cyclohexyloxy. Beispiele für substituiertes Cycloalkyl sind Methyl-, Dimethyl-, Trimethyl-, Methoxy-, Dimethoxy-, Trimethoxy-, Trifluormethyl-, Bistrifluormethyl- und Tristrifluormethylcyclopentyloxy und -cyclohexyloxy.

Bedeuten R₂₉, R₃₀ und R₃₁ Aryl, so handelt es sich bevorzugt um C₆-C₁₂-Aryl und besonders bevorzugt um Phenyl oder Naphthyl. Beispiele für substituiertes Aryl sind Methyl-, Dimethyl-, Trimethyl-, Methoxy-, Dimethoxy-, Trimethoxy-, Trifluormethyl-, Bistrifluormethylund Tristrifluormethylphenyl.

Bedeuten R₂₉, R₃₀ und R₃₁ Aryloxy, so handelt es sich bevorzugt um C₆-C₁₂-Aryloxy und besonders bevorzugt um unsubstituiertes oder substituiertes Phenyloxy oder Naphthyloxy. Beispiele für substituiertes Aryloxy sind Methyl-, Dimethyl-, Trimethyl-, Methylisopropyl-, Isopropyl-, Diisopropyl-, Triisopropyl-, Tert.-butyl-, Methyltert.-butyl-, Di-(tert.-butyl)-, Tri-(tert.-butyl)-, Methoxy-, Dimethoxy-, Trimethoxy-, Trifluormethyl-, Bistrifluormethyl- und Tristrifluormethylphenyloxy.

Bedeuten R₂₉, R₃₀ und R₃₁ Aralkyl, so handelt es sich bevorzugt um C₇-C₁₃-Aralkyl, wobei die Alkylengruppe im Aralkyl bevorzugt Methylen darstellt. Besonders bevorzugt stellt das Aralkyl Benzyl dar. Beispiele für substituiertes Aralkyl sind Methyl-, Dimethyl-, Trimethyl-, Methoxy-, Dimethoxy-, Trimethoxy-, Trifluormethyl-, Bistrifluormethyl- und Tris-(trifluormethyl)benzyl.

Bedeuten R₂₉, R₃₀ und R₃₁ Aralkyloxy, so handelt es sich bevorzugt um unsubstituiertes oder substituiertes C₇-C₁₃-Aralkyloxy, wobei die Alkylengruppe im Aralkyloxy bevorzugt Methylen darstellt. Besonders bevorzugt stellt das Aralkyloxy unsubstituiertes oder substituiertes Benzyloxy dar. Beispiele für substituiertes Aralkyloxy sind Methyl-, Dimethyl-, Trimethyl-, Methoxy-, Dimethoxy-, Trimethoxy-, Trifluormethyl-, Bis-(fluormethyl)- und Tristrifluormethylbenzyloxy.

Besonders bevorzugt sind Komplexsalze der Formel III, worin R₂₉, R₃₀ und R₃₁ für C₁-C₆-Alkyl, C₁-C₆-Alkoxy, C₄-C₁₂-Cycloalkyl, C₄-C₁₂-Cycloalkoxy, C₆-C₁₆-Aryl oder C₆-C₁₆-Aryloxy stehen.

Insbesondere bevorzugt sind Komplexsalze der Formel III, worin R₂₉, R₃₀ und R₃₁ für Phenyl, Tolyl oder Cyclohexyl stehen.

Beispiele für geeignete Phosphine der Formel IV sind (C₆H₅)₃P, (C₆H₅CH₂)₃P, (C₅H₁₁)₃P, (CH₃)₃P, (C₂H₅)₃P, (n-C₃H₇)₃P, (i-C₃H₇)₃P, (n-C₄H₉)₃P, (C₆H₅)₂HP, (C₆H₅CH₂)₂HP, (C₅H₁₁)₂HP, (CH₃)₂HP, (C₂H₅)₂HP, (n-C₃H₇)₂HP, (i-C₃H₇)₂HP, (n-C₄H₉)₂HP, (C₆H₅)H₂P, (C₆H₅CH₂)H₂P, (C₅H₁₁)H₂P, (CH₃)H₂P, (C₂H₅)H₂P, (n-C₃H₇)H₂P, (i-C₃H₇)H₂P, (n-C₄H₉)H₂P, PH₃, (2-CH₃-C₆H₄)₃P, (3-CH₃-C₆H₄)₃P, (4-CH₃-C₆H₄)₃P, (2,4-Di-CH₃-C₆H₃)₃P, (2,6-Di-CH₃-C₆H₃)₃P, (2-C₂H₅-C₆H₄)₃P, (3-C₂H₅-C₆H₄)₃P, (4-C₂H₅-C₆H₄)₃P, (2-n-C₃H₇-C₆H₄)₃P, (3-n-C₃H₇-C₆H₄)₃P, (4-n-C₃H₇-C₆H₄)₃P, (2-i-C₃H₇-C₆H₄)₃P, (3-i-C₃H₇-C₆H₄)₃P, (4-i-C₃H₇-C₆H₄)₃P, (2-n-C₄H₉-CₑH₄)₃P, (3-n-C₄H₉-C₆H₄)₃P, (4-n-C₄H₉-C₆H₄)₃P, (2-i-C₄H₉-C₆H₄)₃P, (3-i-C₄H₉-C₆H₄)₃P, (4-i-C₄H₉-C₆H₄)₃P, (2-t-C₄H₉-C₆H₄)₃P, (3-t-C₄H₉-C₆H₄)₃P, (4-t-C₄H₉-C₆H₄)₃P, (2-CH₃-6-t-C₄H₉-C₆H₃)₃P, (3-CH₃-6-t-C₄H₉-C₆H₃)₃P, (3-CH₃-6-t-C₄H₉-C₆H₃)₃P, (2,6-Di-t-C₄H₉-C₆H₃)₃P, (2,3-Di-t-C₄H₉-C₆H₃)₃P, (2,4-Di-t-C₄H₉-C₆H₃)₃P.

Besonders bevorzugte Phosphine sind Triisopropylphosphin, Tri-tert.-butylphosphin und Tricyclohexylphosphin.

Bei den in den Verbindungen der Formel III an das Metallatom gebundenen Liganden L kann es sich um photolabile oder um nicht-photolabile Liganden handeln.

Bei Verbindungen der Formel III mit photolabilen Liganden wird die katalytische Aktivität durch Einwirkung von Licht erzielt, d.h. bei Bestrahlung des Katalysators mit Licht im sichtbaren oder ultravioletten Bereich wird der photolabile Ligand abgespalten, wobei eine katalytisch aktive Spezies für die Metathesepolymerisation gebildet wird.

Bei den photolabilen Liganden kann es sich zum Beispiel um Stickstoff (N₂), um unsubstituierte oder mit OH, C₁-C₄-Alkyl, C₁-C₄-Alkoxy, C₆-C₁₂-Aryl oder Halogen substituierte monocyclische, polycyclische oder kondensierte Arene mit 6 bis 24, bevorzugt 6 bis 18 und besonders bevorzugt 6 bis 12 C-Atomen oder um unsubstituierte oder mit C₁-C₄-Alkyl, C₁-C₄-Alkoxy oder Halogen substituierte monocyclische Heteroarene, kondensierte Heteroarene oder kondensierte Aren-Heteroarene mit 3 bis 22, bevorzugt 4 bis 16 und besonders 4 bis 10 C-Atomen und 1 bis 3 Heteroatomen ausgewählt aus der Gruppe O, S und N; oder um unsubstituierte oder mit C₁-C₄-Alkyl, C₁-C₄-Alkoxy oder Halogen substituierte aliphatische, cycloaliphatische, aromatische oder araliphatische Nitrile mit 1 bis 22, bevorzugt 1 bis 18, besonders bevorzugt 1 bis 12 und ganz besonders bevorzugt 1 bis 7 C-Atomen handeln. Die bevorzugten Substituenten sind Methyl, Ethyl, Methoxy, Ethoxy, Fluor, Chlor und Brom. Die Arene und Heteroarene sind bevorzugt mit ein bis drei Resten substituiert. Unter den Heteroarenen sind die elektronenreichen Heteroarene bevorzugt.

Einige Beispiele für Arene und Heteroarene sind Benzol, Biphenyl, Naphthalin, Anthracen, Acenaphthen, Fluoren, Phenanthren, Pyren, Chrysen, Fluoranthren, Furan, Thiophen, Pyrrol, Pyridin, γ-Pyran, γ-Thiopyran, Pyrimidin, Pyrazin, Indol, Cumaron, Thionaphthen, Carbazol, Dibenzofuran, Dibenzothiophen, Pyrazol, Imidazol, Benzimidazol, Oxazol, Thiazol, Isoxazol, Isothiazol, Chinolin, Isochinolin, Acridin, Chromen, Phenazin, Phenoxazin, Phenothiazin, Triazine, Thianthren und Purin. Bevorzugte Arene und Heteroarene sind unsubstituiertes oder substituiertes Benzol, Naphthalin, Thiophen und Benzthiophen. Das Aren ist besonders bevorzugt unsubstituiertes oder mit 1 bis 3 C₁-C₄-Alkyl substituiertes Benzol und das Heteroaren ist bevorzugt Thiophen.

Die Nitrile können zum Beispiel mit Methoxy, Ethoxy, Fluor oder Chlor substituiert sein; bevorzugt sind die Nitrile unsubstituiert. Die Alkylnitrile sind bevorzugt linear. Einige Beispiele für Nitrile sind Acetonitril, Propionitril, Butyronitril, Pentylnitril, Hexylnitril, Cyclopentyl- und Cyclohexylnitril, Benzonitril, Methylbenzonitril, Benzylnitril und Naphthylnitril. Bei den Nitrilen handelt es sich bevorzugt um lineare C₁-C₄-Alkylnitrile oder Benzonitril. Von den Alkylnitrilen ist Acetonitril besonders bevorzugt.

In einer bevorzugten Untergruppe handelt es sich bei den photolabilen Liganden um N₂, unsubstituiertes oder mit ein bis drei C₁-C₄-Alkyl substituiertes Benzol, Thiophen, Benzonitril oder Acetonitril.

Nicht-photolabiler Ligand (auch als stark koordinierender Ligand bezeichnet) bedeutet im Rahmen der vorliegenden Erfindung, daß der Ligand bei Bestrahlung des Katalysators im sichtbaren oder nahen ultravioletten Spektralbereich nicht oder nur in unwesentlichem Ausmaß vom Katalysator dissoziiert.

Bei den nicht-photolabilen Liganden kann es sich zum Beispiel um die Heteroatome O, S oder N enthaltende und solvatisierende anorganische und organische Verbindungen, die häufig auch als Lösungsmittel verwendet werden. Beispiele für solche Verbindungen sind H₂O, H₂S, NH₃; gegebenenfalls halogenierte, besonders fluorierte oder chlorierte aliphatische oder cycloaliphatische Alkohole oder Mercaptane mit 1 bis 18, bevorzugt 1 bis 12 und besonders bevorzugt 1 bis 6 C-Atomen, aromatische Alkohole oder Thiole mit 6 bis 18, bevorzugt 6 bis 12 C-Atomen, araliphatische Alkohole oder Thiole mit 7 bis 18, bevorzugt 7 bis 12 C-Atomen; offenkettige oder cyclische und aliphatische, araliphatische oder aromatische Ether, Thioether, Sulfoxide, Sulfone, Ketone, Aldehyde, Carbonsäureester, Lactone, gegebenenfalls N-C₁-C₄-mono- oder -dialkylierte Carbonsäureamide mit 2 bis 20, bevorzugt 2 bis 12 und besonders 2 bis 6 C-Atomen, und gegebenenfalls N-C₁-C₄-alkylierte Lactame; offenkettige oder cyclische und aliphatische, araliphatische oder aromatische, primäre, sekundäre und tertiäre Amine mit ein bis 20, bevorzugt 1 bis 12 und besonders bevorzugt 1 bis 6 C-Atomen.

Beispiele für solche nicht-photolabilen Liganden sind Methanol, Ethanol, n- und i-Propanol, n-, i- und t-Butanol, 1,1,1-Trifluorethanol, Bistrifluormethylmethanol, Tristrifluormethylmethanol, Pentanol, Hexanol, Methyl- oder Ethylmercaptan, Cyclopentanol, Cyclohexanol, Cyclohexylmercaptan, Phenol, Methylphenol, Fluorphenol, Phenylmercaptan, Benzylmercaptan, Benzylalkohol, Diethylether, Dimethylether, Diisopropylether, Di-n- oder Di-t-butylether, Tetrahydrofuran, Tetrahydropyran, Dioxan, Diethylthioether, Tetrahydrothiophen, Dimethylsulfoxid, Diethylsulfoxid, Tetra- und Pentamethylensulfoxid, Dimethylsulfon, Diethylsulfon, Tetra- und Pentamethylensulfon, Aceton, Methylethylketon, Diethylketon, Phenylmethylketon, Methylisobutylketon, Benzylmethylketon, Acetaldehyd, Propionaldehyd, Trifluoracetaldehyd, Benzaldehyd, Essigsäureethylester, Butyrolacton, Dimethylformamid, Dimethylacetamid, Pyrrolidon und N-Methylpyrrolidon.

Die primären Amine können der Formel R₂₆NH₂, die sekundären Amine der Formel R₂₆R₂₇NH und die tertiären Amine der Formel R₂₆R₂₇R₂₈N entsprechen, worin R₂₆ C₁-C₁₈-Alkyl, unsubstituiertes oder mit C₁-C₄-Alkyl oder C₁-C₄-Alkoxy substituiertes C₅- oder C₆-Cycloalkyl, oder unsubstituiertes oder mit C₁-C₄-Alkyl oder C₁-C₄-Alkoxy substituiertes C₆-C₁₈-Aryl oder C₇-C₁₂-Aralkyl darstellt, R₂₇ unabhängig die Bedeutung von R₂₆ hat oder R₂₆ und R₂₇ gemeinsam Tetramethylen, Pentamethylen, 3-Oxa-1,5-pentylen oder -CH₂-CH₂-NH-CH₂-CH₂- oder -CH₂-CH₂-N(C₁-C₄-Alkyl)-CH₂-CH₂- bedeuten, und R₂₈ unabhängig die Bedeutung von R₂₆ hat. Das Alkyl enthält bevorzugt 1 bis 12 und besonders bevorzugt 1 bis 6 C-Atome. Das Aryl enthält bevorzugt 6 bis 12 C-Atome und das Aralkyl enthält bevorzugt 7 bis 9 C-Atome. Beispiele für Amine sind Methyl-, Dimethyl-, Trimethyl-, Ethyl-, Diethyl-, Triethyl-, Methylethyl-, Dimethylethyl, n-Propyl-, Di-n-propyl-, Tri-n-butyl-, Cyclohexyl-, Phenyl- und Benzylamin, sowie Pyrrolidin, N-Methylpyrrolidin, Piperidin, Piperazin, Morpholin und N-Methylmorpholin.

Vorzugsweise enthalten die erfindungsgemässen Zusammensetzungen als Komponente (b) ein Komplexsalz der Formel III, worin L für ein Aren, Heteroaren, Nitril, Stickstoff (N₂), Alkohol, Amin, CO, H₂O oder NH₃ steht.

Besonders bevorzugt als Komponente (b) ist ein Komplexsalz der Formel III, worin L für unsubstituiertes oder mit 1 bis 3 C₁-C₄-Alkyl substituiertes Benzol, Thiophen, Benzonitril, Acetonitril, Stickstoff (N₂), einen unsubstituierten oder teilweise oder vollständig fluorierten C₁-C₄-Alkohol, CO, H₂O oder NH₃ steht.

In den Verbindungen der Formel III können Z₁⁻ und Z₂⁻ für je ein einfach geladenes Anion stehen, wobei Z₁⁻ und Z₂⁻ gleich oder verschieden sein können, oder Z₁⁻ und Z₂⁻ können zusammen ein zweifach geladenes Anion darstellen.

Geeignete Anionen sind zum Beispiel Hydrid (H⁻), Halogenid (zum Beispiel Cl⁻, Br⁻ und I⁻), BF₄⁻, PF₆⁻, SbF₆⁻, AsF₆⁻, unsubstituiertes oder mit C₁-C₄-Alkyl, C₁-C₄-Alkoxy, (C₁-C₄-Alkyl)₃Sioder (C₁-C₄-Alkyl)₃SiO- substituiertes Cyclopentadienyl⁻, oder Indenyl', sowie die Anionen von Sauerstoffsäuren.

Weitere geeignete Anionen sind C₁-C₁₂-, bevorzugt C₁-C₆- und besonders bevorzugt C₁-C₄-Alkoholate, die insbesondere verzweigt sind, zum Beispiel der Formel RₓR_{y}R_{z}C-O⁻ entsprechen, worin Rₓ H oder C₁-C₁₀-Alkyl, R_{y} C₁-C₁₀-Alkyl und R_{z} C₁-C₁₀-Alkyl oder Phenyl darstellen. Beispiele sind besonders i-Propyloxy und t-Butyloxy.

Andere geeignete Anionen sind C₃-C₁₈-, bevorzugt C₅-C₁₄- und besonders bevorzugt C₅-C₁₂-Acetylide, die der Formel R_{w}-C≡C⁻, entsprechen können, worin R_{w} C₁-C₁₆-Alkyl, bevorzugt α-verzweigtes C₃-C₁₂-Alkyl, zum Beispiel Formel RₓR_{y}R_{z}C-, bedeutet, oder unsubstituiertes oder mit ein bis 3 C₁-C₄-Alkyl oder C₁-C₄-Alkoxy substituiertes Phenyl oder Benzyl darstellen. Einige Beispiele sind i-Propylacetylid, i- und t-Butylacetylid, Phenylacetylid, Benzylacetylid, 2-Methylphenylacetylid, 2-i-Propylphenylacetylid, 2-i- Propyl-6-methylphenylacetylid, 2-t-Butylphenylacetylid, 2,6-Di-t-butylphenylacetylid und 2-Methyl-6-t-butylphenylacetylid.

Bei den Anionen von Sauerstoffsäuren kann es sich zum Beispiel um Sulfat, Phosphat, Perchlorat, Perbromat, Periodat, Antimonat, Arsenat, Nitrat, Carbonat, das Anion einer C₁-C₈-Carbonsäure, wie zum Beispiel Formiat, Acetat, Propionat, Butyrat, Benzoat, Phenylacetat, Mono-, Di- oder Trichlor- oder -fluoracetat, Sulfonate, wie zum Beispiel Methylsulfonat, Ethylsulfonat, Propylsulfonat, Butylsulfonat, Trifluormethylsulfonat (Triflat), gegebenenfalls mit C₁-C₄-Alkyl, C₁-C₄-Alkoxy oder Halogen, besonders Fluor, Chlor oder Brom substituiertes Phenylsulfonat oder Benzylsulfonat, wie zum Beispiel Tosylat, Mesylat, Brosylat, p-Methoxy- oder p-Ethoxyphenylsulfonat, Pentafluorphenylsulfonat oder 2,4,6-Triisopropylsulfonat, und Phosphonate, wie zum Beispiel Methylphosphonat, Ethylphosphonat, Propylphoshonat, Butylphosphonat, Phenylphosphonat, p-Methylphenylphosphonat und Benzylphosphonat, handeln.

Vorzugsweise stehen Z₁⁻ und Z₂⁻ in der Formel III für H⁻, Cl⁻, Br⁻, BF₄⁻, PF₆⁻, SbF₆⁻, AsF₆⁻, CF₃SO₃⁻, C₆H₅-SO₃⁻, p-Toluolsulfonat (Tosylat), 3,5-Dimethylphenylsulfonat, 2,4,6-Trimethylphenylsulfonat, 4-Trifluormethylphenylsulfonat oder Cyclopentadienyl.

Besonders bevorzugte ROMP-Katalysatoren der Formel III sind [(Cyclohexyl)₃P]₂RuCl₂, [(C₆H₅)₃P]₃ RuCl₂, [(C₆H₅)₃P]₃ (CO)RuH₂, [(C₆H₅)₃P]₃ RuCl(Cyclopentadienyl), [(Cyclohexyl)₃P]₂(CH₃OH)Ru(Tosylat)₂, [(o-Tolyl)₃P]₃RuCl₂, [(CH₃)₂CH]₃P(Cumol)RuCl₂, (Cyclohexyl)₃P(Cumol)RuCl₂. und insbesondere (1-Methyl-4-isopropylbenzol)-RuCl₂P(Cyclohexyl)₃.

Geeignete Füllstoffe, die als Komponente (c) in den erfindungsgemässen Zusammensetzungen verwendet werden können, sind beispielsweise Metallpulver, Holzmehl, Glaspulver, Glaskugeln, Halbmetall- und Metalloxide, wie zum Beispiel SiO₂ (Aerosile, Quarz, Quarzmehl, Quarzgut), Korund und Titanoxid, Halbmetall- und Metallnitride, wie zum Beispiel Siliziumnitrid, Bornitrid und Aluminiumnitrid, Halbmetall- und Metallcarbide (SiC), Metallcarbonate (Dolomit, Kreide, CaCO₃), Metallsulfate (Baryt, Gips), Gesteinsmehle und natürliche oder synthetische Mineralien hauptsächlich aus der Silikatreihe, wie zum Beispiel Talkum, Glimmer, Kaolin,Wollastonit, Bentonit und andere.

Vorzugsweise wird ein Metalloxid, -carbonat, -sulfat oder -silikat oder SiO₂ als Komponente (c) verwendet.

Besonders bevorzugt als Komponente (c) sind Kreide, Al₂O₃ und SiO₂.

Von den verschiedenen SiO₂-Modifikationen ist Quarzmehl besonders bevorzugt.

Die Silane der Formel I sind bekannt und können nach bekannten Methoden hergestellt werden. Zum Teil sind diese Silane kommerziell erhältlich.

Bevorzugt sind Silane der Formel 1, worin R als einwertige organische Gruppe mit 2 bis 100 C-Atomen für C₁-C₂₀-Alkyl, C₅-C₂₀-Aryl, C₆-C₂₀-Aralkyl, C₅-C₁₂-Cycloalkyl, C₂-C₂₀-Alkoxyalkyl, C₂-C₂₀-Alkenyl, C₄-C₂₅-Acryloxyalkyl, C₄-C₂₅-Methacryloxyalkyl, C₂-C₂₀-Aminoalkyl, C₄-C₂₅-Glycidyloxyalkyl, C₇-C₂₅-Epoxycyclohexylalkyl oder den Rest eines Polysiloxans steht.

Alkyl als R, Y₁, Y₂ oder Y₃ umfasst beispielsweise Methyl, Ethyl, Isopropyl, n-Propyl, n-Butyl, Isobutyl, sek.-Butyl, tert.-Butyl sowie die verschiedenen isomeren Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl-, Octadecyl-, Nonadecyl- und Eicosylgruppen.

Aryl als R, Y₁, Y₂ oder Y₃ enthält bevorzugt 6 bis 10 C-Atome. Es kann sich beispielsweise um Phenyl, Pentalinyl, Indenyl, Naphtyl, Azulinyl und Anthryl handeln.

Aralkyl als R, Y₁, Y₂ oder Y₃ enthält bevorzugt 7 bis 12 C-Atome und besonders bevorzugt 7 bis 10 C-Atome. Es kann sich zum Beispiel um Benzyl, Phenethyl, 3-Phenylpropyl, α-Methylbenzyl, 4-Phenylbutyl und α,α-Dimethylbenzyl handeln.

Bei Cycloalkyl als R, Y₁, Y₂ oder Y₃ handelt es sich bevorzugt um C₅-C₈-Cycloalkyl, besonders um C₅- oder C₆-Cycloalkyl. Einige Beispiele sind Cyclopropyl, Dimethylcyclopropyl, Cyclobutyl, Cyclopentyl, Methylcyclopentyl, Cyclohexyl, Cycloheptyl und Cyclooctyl.

Beispiele für Alkoxyalkyl als R, Y₁, Y₂ oder Y₃ sind 2-Methoxyethyl, 2-Ethoxyethyl, 2-Methoxypropyl, 3-Methoxypropyl, 2-Ethoxypropyl und 3-Ethoxypropyl.

Alkenyl als R umfaßt zum Beispiel Propenyl, Isopropenyl, 2-Butenyl, 3-Butenyl, Isobutenyl, n-Penta-2,4-dienyl, 3-Methyl-but-2-enyl, n-Oct-2-enyl, n-Dodec-2-enyl, Isododecenyl, n-Octadec-2-enyl und n-Octadec-4-enyl.

Beispiele für Acryloxyalkyl und Methacryloxyalkyl sind 2-Acryloxyethyl, 2-Methacryloxyethyl, 3-Acryloxypropyl und 3-Methacryloxypropyl.

Geeignete Aminoalkylgruppen sind zum Beispiel 2-Aminoethyl, 3-Aminopropyl, 3-Aminobutyl und 4-Aminobutyl.

Als Glycidyloxyalkylgruppen kommen beispielsweise 2-Glycidylethyl, 3-Glycidylpropyl, 3-Glycidylbutyl und 4-Glycidylbutyl in Betracht.

Epoxycyclohexylalkyl ist vorzugsweise β-(3,4-Epoxycyclohexyl)ethyl.

R in der Formel I bedeutet vorzugsweise Methyl, Ethyl, n-Octyl, Vinyl, 3-Mercaptopropyl, 3-Aminopropyl, 3-Glycidyloxypropyl, 3-Acryloxypropyl, 3-Methacryloxypropyl, β-(3,4-Epoxycyclohexyl)ethyl, N-(β-Aminoethyl)-3-aminopropyl, 3-Ureidopropyl, 3-lsocyanatopropyl, H₂N-CH₂CH₂NH-CH₂CH₂NH-CH₂CH₂CH₂-, (CH₃O)₃Si-CH₂CH₂CH₂NH-CH₂CH₂CH₂- oder eine Gruppe der Formel

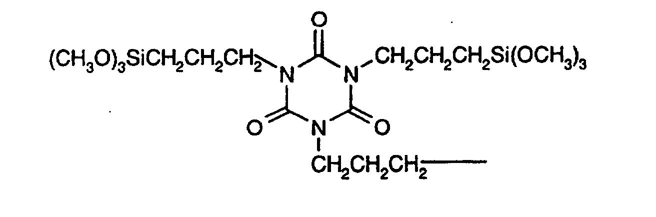

Besonders bevorzugt sind Silane der Formel I, worin R für Methyl, Vinyl, 3-Mercaptopropyl oder 3-Aminopropyl steht. Y₁, Y₂ und Y₃ sind in der Formel I vorzugsweise Methyl, Ethyl, Acetyl oder 2-Methoxyethyl.

Beispiele für geeignete Silane der Formel I sind Octyltriethoxysilan, Methyltriethoxysilan, Methyltrimethoxysilan, tris-[3-(Trimethoxysilyl)propyl]isocyanurat, Vinyltriethoxysilan, Vinyltrimethoxysilan, Vinyl-tris-(2-methoxyethoxy)silan, γ-Methacryloxypropyltrimethoxysilan, β-(3,4-Epoxycyclohexyl)ethyltrimethoxysilan, γ-Glycidyloxypropyltrimethoxysilan, γ-Mercaptopropyltrimethoxysilan, γ-Aminopropyltriethoxysilan, γ-Aminopropyltrimethoxysilan, N-(β-Aminoethyl)-γ-aminopropyltrimethoxysilan, H₂NCH₂CH₂NHCH₂CH₂NHCH₂CH₂CH₂Si(OCH₃)₃, (OCH₃)₃, Bis-[γ-(Trimethoxysilyl)propyl]amin, organisch modifiziertes Polydimethylsiloxan der Formel

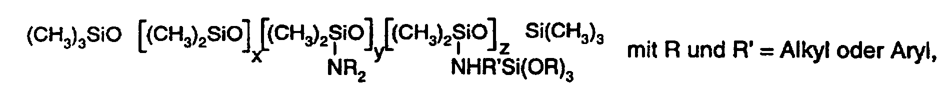

γ-Ureidopropyltrimethoxysilan, γ-Isocyanatopropyltriethoxysilan, 3-Chlorpropyltrimethoxysilan, 3-Triethoxysilylpropylbernsteinsäureanhydrid, 3-Methacryloxypropyltrimethoxysilan, Vinyltris(2-methoxyethoxy)silan, Vinyltriacetoxysilan, 3-Mercaptopropyltrimethoxysilan, 3-Glycidyloxypropyltriethoxysilan, 3-(2-Aminoethylamino)propyltrimethoxysilan und 3-(2-Aminoethylamino)propylmethyldimethoxysilan.

Besonders zu erwähnen ist, dass bei Verwendung von Quarzmehl als Füllstoff anstelle eines Gemisches der Komponenten (c) und (d) auch ein mit einem Silan der Formel I vorbehandeltes Quarzmehl eingesetzt werden kann. Solche mit Epoxysilan, Alkylsilan oder Vinylsilan vorbehandelten Quarzmehle sind z.B. unter den Bezeichnungen Silbond® W12 EST, Vp W12 VST und Vp W12 SST im Handel erhältlich.

Die Mengen der Komponenten (a) - (d) können in den erfindungsgemässen Zusammensetzungen in weiten Bereichen variieren.

Vorzugsweise enthalten die erfindungsgemässen Zusammensetzungen 15-75 Gew.-% der Komponente (a), 0,001-10,0 Gew.-% der Komponente (b), 20-80 Gew.-% der Komponente (c) und 0,01-20,0 Gew.-% der Komponente (d), wobei die Summe der Komponenten (a), (b), (c) und (d) 100 Gew.-% beträgt.

Besonders bevorzugt sind erfindungsgemässe Zusammensetzungen enthaltend 25-65 Gew.-%, insbesondere 30-50 Gew.-%, der Komponente (a), 0,01-2,0 Gew.-%, insbesondere 0,1-1,0 Gew.-%, der Komponente (b), 30-75 Gew.-%, insbesondere 50-70 Gew.-%, der Komponente (c) und 0,05-10,0 Gew.-%, insbesondere 0,1-2,0 Gew.-%, der Komponente (d).

Die Herstellung der erfindungsgemässen Stoffgemische kann in üblicher Weise durch Vermischen der Komponenten mit Hilfe bekannter Mischaggregate (z.B. Rührer, Walzen) erfolgen.

Neben den Komponenten (a) - (d) kann die erfindungsgemässe Zusammensetzung weitere übliche Zusatzstoffe enthalten, wie z.B. Antioxidantien, Lichtschutzmittel, Weichmacher, Farbstoffe, Pigmente, Thixotropiemittel, Zähigkeitsverbesserer, Entschäumer, Antistatika, Gleitmittel und Entformungshilfsmittel.

Weiterhin kann die erfindungsgemässe Zusammensetzung inerte Lösungsmittel enthalten. Geeignete inerte Lösungsmittel sind zum Beispiel protisch-polare und aprotische Lösungsmittel, die allein oder in Mischungen aus mindestens zwei Lösungsmitteln verwendet werden können. Beispiele sind: Ether (Dibutylether, Tetrahydrofuran, Dioxan, Ethylenglykolmonomethyl- oder -dimethylether, Ethylenglykolmonoethyl- oder -diethylether, Diethylenglykoldiethylether, Triethylenglykoldimethylether), halogenierte Kohlenwasserstoffe (Methylenchlorid, Chloroform, 1,2-Dichlorethan, 1,1,1-Trichlorethan, 1,1,2,2-Tetrachlorethan), Carbonsäureester und Lactone (Essigsäureethylester, Propionsäuremethylester, Benzoesäureethylester, 2-Methoxyethylacetat, γ-Butyrolacton, δ-Valerolacton, Pivalolacton), Carbonsäureamide und Lactame (N,N-Dimethylformamid, N,N-Diethylformamid, N,N-Dimethylacetamid, Tetramethylhamstoff, Hexamethylphosphorsäuretriamid, γ-Butyrolactam, ∈-Caprolactam, N-Methylpyrrolidon, N-Acetylpyrrolidon, N-Methylcaprolactam), Sulfoxide (Dimethylsulfoxid), Sulfone (Dimethylsulfon, Diethylsulfon, Trimethylensulfon, Tetramethylensulfon), tertiäre Amine (N-Methylpiperidin, N-Methylmorpholin), aliphatische und aromatische Kohlenwasserstoffe, wie zum Beispiel Petrolether, Pentan, Hexan, Cyclohexan, Methylcyclohexan, Benzol oder substituierte Benzole (Chlorbenzol, o-Dichlorbenzol, 1,2,4-Trichlorbenzol, Nitrobenzol, Toluol, Xylol) und Nitrile (Acetonitril, Propionitril, Benzonitril, Phenylacetonitril). Bevorzugte Lösungsmittel sind aprotische polare und unpolare Lösungsmittel.

Bevorzugte Lösungsmittel sind aliphatische und aromatische Kohlenwasserstoffe sowie Gemische solcher Lösungsmittel.

Ein besonderer Vorteil der erfindungsgemässen Zusammensetzungen besteht darin, daß bei flüssigen Monomeren eine Metathesepolymerisation ohne die Verwendung eines Lösungsmittels durchgeführt werden kann.

Die erfindungsgemässe Zusammensetzung kann direkt vor der Polymerisation hergestellt oder als vorformuliertes Gemisch verwendet werden. Das Gemisch kann vor der Polymerisation als gebrauchsfertige Formulierung längere Zeit gelagert werden, was für die grosstechnische Anwendung von Vorteil ist. Es empfiehlt sich jedoch eine Lagerung unter Lichtausschluss, wenn der Katalysator photolabile Liganden enthält.

Einen weiteren Erfindungsgegenstand bildet ein Verfahren zur Herstellung eines Metathesepolymerisats, dadurch gekennzeichnet, dass eine Zusammensetzung enthaltend die Komponenten (a) bis (d) auf eine Temperatur >40 °C erwärmt wird.

Zweckmässig wird das erfindungsgemässe Verfahren bei einer Temperatur von mindestens 60°C durchgeführt. Insbesondere wird das erfindungsgemäße Verfahren bei Temperaturen von 60 bis 300 °C, bevorzugt 60 bis 250 °C, besonders bevorzugt 60 bis bis 200 °C und insbesondere bevorzugt 70 bis 160 °C, durchgeführt. Nach der Polymerisation kann es vorteilhaft sein, das Gemisch bei erhöhten Temperaturen, zum Beispiel 80 bis 200 °C, nachzutempern.

Die Polymerisation kann mit formgebenden Verfahren verbunden sein, zum Beispiel Kalandrier-, Giess-, Press-, Spritzguss- oder Extrusionsverfahren. Mit dem erfindungsgemässen Verfahren können Werkstoffe zur Herstellung von Formkörpern aller Art und Beschichtungen hergestellt werden. Vorteilhaft werden Formgebung und Polymerisation in lösungsmittelfreien Reaktivsystemen verbunden, wobei Verarbeitungsverfahren, wie zum Beispiel Spritzgiessen, Extrusion, Polymerisationen in vorgegebenen Formen (gegebenenfalls unter Druck) angwendet werden können.

Die nach dem erfindungsgemässen Verfahren hergestellten Gemische können Homopolymere, Copolymere mit statistischer Verteilung der Struktureinheiten, Pfropfpolymere, Blockpolymere oder vernetzte Polymere enthalten. Die Polymere können ein mittleres Molekulargewicht von 500 bis zu 2'000'000 Dalton, vorzugsweise 1000 bis 1'000'000 Dalton (bestimmt mittels Gelpermeationschromatographie) aufweisen.

Die nach dem erfindungsgemässen Verfahren hergestellten Gemische zeichnen sich vor allem durch eine hohe Wärmestabilität, hohe Zähigkeit und mechanische Festigkeit sowie durch hervorragende elektrische Eigenschaften (niedrige Dielektrizitätskonstante, niedriger Verlustfaktor bzw. tanδ-Wert) aus und eignen sich besonders für Anwendungen in der Vakuum-Giesstechnologie, insbesondere als Umhüllungsmaterial für elektrische und elektronische Bauteile.

Die gehärteten Vergussmassen weisen gute mechanische und dielektrische Eigenschaften und eine hohe Lebensdauer aus.

Gegenstand der vorliegenden Erfindung ist somit auch die Verwendung der erfindungsgemässen Zusammensetzung als Umhüllungsmaterial für elektrische oder elektronische Bauteile.

Die nachfolgenden Beispiele erläutern die Erfindung.

### Beispiele:

Das in den nachfolgenden Beispielen verwendete Dicyclopentadien wird mindestens 4 Tage bei Raumtemperatur über KOH oder Molekularsieb (5 Angström) getrocknet. Vor Gebrauch wird die benötigte Menge Dicyclopentadien ca. 10 Minuten unter Vakuum (3 mbar) entgast.
Als ROMP-Katalysator wird in allen Beispielen (1-Methyl-4-isopropylbenzol)-RuCl₂P(Cyctohexyl)₃ (Katalysator A) verwendet.
Weiterhin werden die folgenden kommerziell erhältlichen Substanzen eingesetzt:
- Entschäumer:: Byk 085 (Fa. Byk Chemie) Byk 066 (Fa. Byk Chemie)
- Füllstoffe:: Quarzmehl W 12 (Quarzwerke Frechen)
Silbond W 12 EST (Quarzwerke Frechen, mit Epoxysilan vorbehandeltes Quarzmehl W 12)
Vp W 12 VST (Quarzwerke Frechen, mit Alkylsilan vorbehandeltes Quarzmehl W 12)
Vp W 12 SST (Quarzwerke Frechen, mit Vinylsilan vorbehandeltes Quarzmehl W 12)
- Norsorex® NS: thermoplastisches Polynorbomen (Nippon Zeon)

### Beispiel 1:

0,39 g Norsorex® NS werden bei 80 °C in 38,95 g Dicyclopentadien unter Rühren gelöst. Nach Abkühlen auf 60 °C werden 0,26 g Byk 066, 0,49 g Vinyltrimethoxysilan (Silquest® A-171 der Fa. Osi Specialties) und 0,2 g Katalysator A hinzugefügt. Nach 10 Minuten Rühren bei 60 °C werden 59,71 g Quarzmehl W 12 portionsweise hinzugegeben. Die Mischung wird 15 Minuten ohne weiteres Aufheizen gerührt und anschliessend unter Vakuum 3-5 Minuten entgast. Die so hergestellte Mischung wird in eine Aluminiumform gegossen und ausgehärtet (2 h/80 °C; 4 h/100 °C; 1 h/150 °C). Die mechanischen und elektrischen Eigenschaften des so erhaltenen graubraunen Prüfkörpers sind in Tabelle 1 angegeben.

### Beispiel 2:

0,39 g Norsorex® NS werden bei 80 °C in 39,09 g Dicyclopentadien unter Rühren gelöst. Nach Abkühlen auf 60 °C werden 0,26 g Byk 066 und 0,2 g Katalysator A hinzugefügt. Nach 10 Minuten Rühren bei 60 °C werden 60,06 g Silbond W 12 EST portionsweise hinzugegeben. Die Mischung wird 10 Minuten ohne weiteres Aufheizen gerührt und anschliessend unter Vakuum 3-5 Minuten entgast. Die so hergestellte Mischung wird in eine Aluminiumform gegossen und ausgehärtet (2 h/80 °C; 4 h/100 °C; 1 h/150 °C). Die mechanischen und elektrischen Eigenschaften des so erhaltenen graubraunen Prüfkörpers sind in Tabelle 1 angegeben.

### Beispiel 3:

Das im Beispiel 2 beschriebene Verfahren wird unter Verwendung von Vp W 12 VST anstelle von Silbond W 12 EST wiederholt. Die Eigenschaften des so ausgehärteten Prüfkörpers sind in Tabelle 1 angegeben.

### Beispiel 4:

Das im Beispiel 2 beschriebene Verfahren wird unter Verwendung von Vp W 12 SST anstelle von Silbond W 12 EST wiederholt. Die Eigenschaften des so ausgehärteten Prüfkörpers sind in Tabelle 1 angegeben.

### Beispiel 5 (Vergleich):

0,39 g Norsorex® NS werden bei 80 °C in 39,09 g Dicyclopentadien unter Rühren gelöst. Nach Abkühlen auf 60 °C werden 0,26 g Byk 066 und 0,2 g Katalysator A hinzugefügt. Nach 10 Minuten Rühren bei 60 °C werden 60,06 g Quarzmehl W 12 portionsweise hinzugegeben. Die Mischung wird 10 Minuten ohne weiteres Aufheizen gerührt und anschliessend unter Vakuum 3-5 Minuten entgast. Die so hergestellte Mischung wird in eine Aluminiumform gegossen und ausgehärtet (2 h/80 °C; 4 h/100 °C; 1 h/150 °C). Die mechanischen und elektrischen Eigenschaften des so erhaltenen graubraunen Prüfkörpers sind in Tabelle 1 angegeben.

**Tabelle 1:**

| Beispiel | 1 | 2 | 3 | 4 | 5 |
|---|---|---|---|---|---|
| Biegefestigkeit [N/mm²] | 103 | 54,9 | 61,8 | 47,5 | 41,5 |
| Randfaserdehnung [%] | 2,3 | 1,3 | 1,13 | 3,79 | 1,28 |
| Elastizitätsmodul [N/mm²] | 6281 | 6217 | 6196 | 4853 | 6774 |
| K_{1C}^{1.)} [J/m²] | 3,025 | | | | 2,51 |
| G_{1C}^{2.)} [kJ/m²] | 1358,5 | | | | 846,7 |
| Schlagfestigkeit | 12 | | | | |
| Dielektrischer Verlustfaktor: | | | | | |
| T für tan δ < 0.05 [°C]^{3.)} | 140 | 77 | 89 | 108 | 25 |
| T für tan δ < 0,10 [°C]^{4.)} | 156 | 118 | 168 | 152 | 45 |
| Dielektrizitätskonstante εᵣ | 3,5 | 3,9 | 3,7 | 3,6 | 2,4 |

| | | | | | |
|---|---|---|---|---|---|
| ^{1.)} K_{1C}: Kritischer Spannungs-Intensitäts-Faktor | | | | | |
| ^{2.)} G_{1C}: spezifische Bruchenergie | | | | | |
| ^{3.)} Temperatur bei der tan δ den Wert von 0,05 erreicht | | | | | |
| ^{4.)} Temperatur bei der tan δ den Wert von 0,10 erreicht | | | | | |

## Patentansprüche

1. Zusammensetzung enthaltend
(a) mindestens ein gespanntes Cycloolefin,
(b) einen Katalysator für die ringöffnende Metathese-Polymerisation der Formel III
(R₂₉R₃₀R₃₁P)ₓL_{y}Me²⁺Z₁⁻Z₂⁻ (III),
worin R₂₉, R₃₀ und R₃₁ unabhängig voneinander H, C₁-C₂₀-Alkyl, C₁-C₂₀-Alkoxy, unsubstituiertes oder mit C₁-C₆-Alkyl, C₁-C₆-Halogenalkyl oder C₁-C₆-Alkoxy substituiertes C₄-C₁₂-Cycloalkyl oder Cycloalkoxy, oder unsubstituiertes oder mit C₁-C₆-Alkyl, C₁-C₆-Halogenalkyl oder C₁-C₆-Alkoxy substituiertes C₆-C₁₆-Aryl oder C₆-C₁₆-Aryloxy, oder unsubstituiertes oder mit C₁-C₆-Alkyl, C₁-C₆-Halogenalkyl oder C₁-C₆-Alkoxy substituiertes C₇-C₁₆-Aralkyl oder C₇-C₁₆-Aralkyloxy darstellt; die Reste R₃₀ und R₃₁ gemeinsam unsubstituiertes oder mit C₁-C₆-Alkyl, C₁-C₆-Halogenalkyl oder C₁-C₆-Alkoxy substituiertes Tetra- oder Pentamethylen, oder Tetra- oder Pentamethylendioxyl bedeuten, oder unsubstituiertes oder mit C₁-C₆-Alkyl, C₁-C₆-Halogenalkyl oder C₁-C₆-Alkoxy substituiertes und mit 1 oder 2 1,2-Phenylen kondensiertes Tetra- oder Pentamethylen, oder Tetra- oder Pentamethylendioxyl darstellen, oder unsubstituiertes oder mit C₁-C₆-Alkyl, C₁-C₆-Halogenalkyl oder C₁-C₆-Alkoxy substituiertes und in den 1,2- und 3,4-Stellungen mit 1,2-Phenylen kondensiertes Tetramethylendioxyl darstellen, und R₃₁ die zuvor angebene Bedeutung hat;
L einen Neutralliganden bedeutet, Me für Ru oder Os steht, Z₁⁻ und Z₂⁻ je ein einfach geladenes Anion oder Z₁⁻ und Z₂⁻ zusammen ein zweifach geladenes Anion darstellen,
x eine Zahl von 1 bis 3 und y eine Zahl von 0 bis 3 darstellen, wobei gilt 2 ≤ x+y ≤ 4.
(c) einen Füllstoff und
(d) ein Silan der Formel I 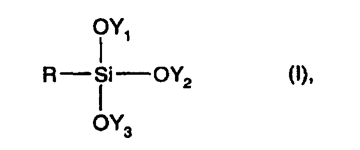
worin R für eine einwertige organische Gruppe mit 2 bis 100 C-Atomen steht, wobei ein oder mehrere -Atome durch O-, S-, N- oder Si-Atome ersetzt sein können und Y₁, Y₂ und Y₃ unabhängig voneinander C₁-C₂₀-Alkyl, C₅-C₂₀-Aryl, C₆-C₂₀-Aralkyl, C₅-C₁₂-Cycloalkyl, C₂-C₂₀-Alkoxyalkyl oder C₁-C₂₀-Acyl bedeuten.

2. Zusammensetzung nach Anspruch 1 enthaltend als Komponente (a) eine Verbindung der Formel II 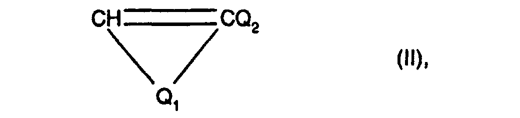 worin Q₁ ein Rest mit mindestens einem Kohlenstoffatom ist, der zusammen mit der -CH=CQ₂-Gruppe einen mindestens 3-gliedrigen alicyclischen Ring bildet, welcher ein oder mehrere Heteroatome ausgewählt aus der Gruppe Silicium, Phosphor, Sauerstoff, Stickstoff oder Schwefel enthalten kann, und welcher unsubstituiert oder mit Halogen, =O, -CN, -NO₂, R₁R₂R₃Si-(O)ᵤ-, -COOM, -SO₃M, -PO₃M, -COO(M₁)_{1/2}, -SO₃(M₁)_{1/2}, -PO₃(M₁)_{1/2}, C₁-C₂₀-Alkyl, C₁-C₂₀-Hydroxyalkyl, C₁-C₂₀-Halogenalkyl, C₁-C₆-Cyanoalkyl, C₃-C₈-Cycloalkyl, C₆-C₁₆-Aryl, C₇-C₁₆-Aralkyl, C₃-C₆-Heterocycloalkyl, C₃-C₁₆-Heteroaryl, C₄-C₁₆-Heteroaralkyl oder R₄-X-substituiert ist; oder bei welchem zwei benachbarte C-Atome durch -CO-O-CO- oder -CO-NR₅-CO- verbunden sind; oder bei welchem an benachbarten Kohlenstoffatomen des alicyclischen Rings ein alicyclischer, aromatischer oder heteroaromatischer Ring ankondensiert ist, welcher unsubstituiert oder mit Halogen, -CN, -NO₂, R₆R₇R₈Si-(O)ᵤ-, -COOM, -SO₃M, -PO₃M, -COO(M₁)_{1/2}, -SO₃(M₁)_{1/2}, -PO₃(M₁)_{1/2}, C₁-C₂₀-Alkyl, C₁-C₂₀-Halogenalkyl, C₁-C₂₀-Hydroxyalkyl, C₁-C₆-Cyanoalkyl, C₃-C₈-Cycloalkyl, C₆-C₁₆-Aryl, C₇-C₁₆-Aralkyl, C₃-C₆-Heterocycloalkyl, C₃-C₁₆-Heteroaryl, C₄-C₁₆-Heteroaralkyl oder R₁₃-X₁-substituiert ist; X und X₁ unabhängig voneinander für -O-, -S-, -CO-, -SO-, -SO₂-, -O-CO-, -COO-, -CO-NR₅-, -NR₁₀-CO-, -SO₂-O- oder -O-SO₂- stehen; R₁, R₂ und R₃ unabhängig voneinander C₁-C₁₂-Alkyl, C₁-C₁₂-Perfluoralkyl, Phenyl oder Benzyl bedeuten; R₄ und R₁₃ unabhängig voneinander C₁-C₂₀-Alkyl, C₁-C₂₀-Halogenalkyl, C₁-C₂₀-Hydroxyalkyl, C₃-C₈-Cycloalkyl, C₆-C₁₆-Aryl, C₇-C₁₆-Aralkyl bedeuten; R₅ und R₁₀ unabhängig voneinander Wasserstoff, C₁-C₁₂-Alkyl, Phenyl oder Benzyl bedeuten, wobei die Alkylgruppen ihrerseits unsubstituiert oder mit C₁-C₁₂-Alkoxy oder C₃-C₈-Cycloalkyl substituiert sind; R₆, R₇ und R₈ unabhängig voneinander C₁-C₁₂-Alkyl, C₁-C₁₂-Perfluoralkyl, Phenyl oder Benzyl bedeuten; M für ein Alkatimetall und M₁ für ein Erdalkalimetall stehen; und u für 0 oder 1 steht; wobei der mit Q₁ gebildete alicyclische Ring weitere nicht-aromatische Doppelbindungen enthalten kann;
Q₂ Wasserstoff, C₁-C₂₀-Alkyl, C₁-C₂₀-Halogenalkyl, C₁-C₁₂-Alkoxy, Halogen, -CN, R₁₁-X₂-darstellt; R₁₁ C₁-C₂₀-Alkyl, C₁-C₂₀-Halogenalkyl, C₁-C₂₀-Hydroxyalkyl, C₃-C₈-Cycloalkyl, C₆-C₁₆-Aryl oder C₇-C₁₆-Aralkyl bedeutet; X₂ -COO- oder -CO-NR₁₂- ist; R₁₂ Wasserstoff, C₁-C₁₂-Alkyl, Phenyl oder Benzyl darstellt;
wobei die vorgenannten Cycloalkyl-, Heterocycloalkyl-, Aryl-, Heteroaryl-, Aralkyl- und Heteroaralkylgruppen unsubstituiert oder mit C₁-C₁₂-Alkyl, C₁-C₁₂-Alkoxy, -NO₂, -CN oder Halogen substituiert sind, und wobei die Heteroatome der vorgenannten Heterocycloalkyl-, Heteroaryl- und Heteroaralkylgruppen aus der Gruppe -O-, -S-, -NR₉- und -N= ausgewählt sind; und R₉ Wasserstoff, C₁-C₁₂-Alkyl, Phenyl oder Benzyl darstellt.

3. Zusammensetzung nach Anspruch 1 enthaltend als Komponente (a) Norbornen oder ein Norbornenderivat.

4. Zusammensetzung nach Anspruch 1 enthaltend als Komponente (a) Dicyclopentadien.

5. Zusammensetzung nach Anspruch 1 enthaltend als Komponente (b) ein Ruthenium(+II)-Komplexsalz oder ein Osmium(+ll)-Komplexsalz.

6. Zusammensetzung nach Anspruch 1, enthaltend als Komponente (b) ein Komplexsalz der Formel III, worin R₂₉, R₃₀ und R₃₁ für C₁-C₆-Alkyl, C₁-C₆-Alkoxy, C₄-C₁₂-Cycloalkyl, C₄-C₁₂-Cycloalkoxy, C₆-C₁₆-Aryl oder C₆-C₁₆-Aryloxy stehen.

7. Zusammensetzung nach Anspruch 6, enthaltend als Komponente (b) ein Komplexsalz der Formel III, worin R₂₉, R₃₀ und R₃₁ für Phenyl, Tolyl oder Cyclohexyl stehen.

8. Zusammensetzung nach Anspruch 1, enthaltend als Komponente (b) ein Komplexsalz der Formel III, worin L für ein Aren, Heteroaren, Nitril, Stickstoff (N₂), Alkohol, Amin, CO, H₂O oder NH₃ steht.

9. Zusammensetzung nach Anspruch 8, enthaltend als Komponente (b) ein Komplexsalz der Formel III, worin L für unsubstituiertes oder mit 1 bis 3 C₁-C₄-Alkyl substituiertes Benzol, Thiophen, Benzonitril, Acetonitril, Stickstoff (N₂), einen unsubstituierten oder teilweise oder vollständig fluorierten C₁-C₄-Alkohol, CO, H₂O oder NH₃ steht.

10. Zusammensetzung nach Anspruch 1, enthaltend als Komponente (b) ein Komplexsalz der Formel III, worin Z₁⁻ und Z₂⁻ unabhängig voneinander für H⁻, Cl⁻, Br⁻, BF₄⁻, PF₆⁻, SbF₆⁻, AsF₆⁻, CF₃SO₃⁻, C₆H₅-SO₃⁻, p-Toluolsulfonat (Tosylat), 3,5-Dimethylphenylsulfonat, 2,4,6-Trimethylphenylsulfonat oder 4-Trifluormethylphenylsulfonat oder Cyclopentadienyl stehen.

11. Zusammensetzung nach Anspruch 1, enthaltend als Komponente (b) ein Ruthenium(+II)-Komplexsalz.

12. Zusammensetzung nach Anspruch 1 enthaltend als Komponente (c) ein Metalloxid, -carbonat, -sulfat, -silikat oder SiO₂.

13. Zusammensetzung nach Anspruch 1 enthaltend als Komponente (c) Kreide, Al₂O₃ oder SiO₂.

14. Zusammensetzung nach Anspruch 1 enthaltend als Komponente (d) ein Silan der Formel I, worin R für C₁-C₂₀-Alkyl, C₅-C₂₀-Aryl, C₆-C₂₀-Aralkyl, C₅-C₁₂-Cycloalkyl, C₂-C₂₀-Alkoxyalkyl, C₂-C₂₀-Alkenyl, C₄-C₂₅-Acryloxyalkyl, C₄-C₂₅-Methacryloxyalkyl, C₂-C₂₀-Aminoalkyl, C₄-C₂₅-Glycidyloxyalkyl, C₇-C₂₅-Epoxycyclohexylalkyl oder den Rest eines Polysiloxans steht.

15. Zusammensetzung nach Anspruch 1 enthaltend als Komponente (d) ein Silan der Formel I, worin R für Methyl, Ethyl, n-Octyl, Vinyl, 3-Mercaptopropyl, 3-Aminopropyl, 3-Glycidyloxypropyl, 3-Acryloxypropyl, 3-Methacryloxypropyl, β-(3,4-Epoxycyclohexyl)ethyl, N-(β-Aminoethyl)-3-aminopropyl, 3-Ureidopropyl, 3-lsocyanatopropyl, H₂N-CH₂CH₂NH-CH₂CH₂NH-CH₂CH₂CH₂-, (CH₃O)₃Si-CH₂CH₂CH₂NH-CH₂CH₂CH₂- oder eine Gruppe der Formel 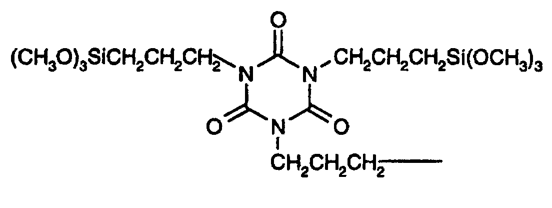 steht.

16. Zusammensetzung nach Anspruch 1 enthaltend als Komponente (d) ein Silan der Formel I, worin R für Methyl, Vinyl, 3-Mercaptopropyl oder 3-Aminopropyl steht.

17. Zusammensetzung nach Anspruch 1 enthaltend als Komponente (d) ein Silan der Formel I, worin Y₁, Y₂ und Y₃ für Methyl, Ethyl, Acetyl oder 2-Methoxyethyl stehen.

18. Zusammensetzung nach Anspruch 1 enthaltend 15-75 Gew.-% der Komponente (a), 0,001-10,0 Gew.-% der Komponente (b), 20-80 Gew.-% der Komponente (c) und 0,01-20,0 Gew.-% der Komponente (d).

19. Verfahren zur Herstellung eines Metathesepolymerisats, **dadurch gekennzeichnet, dass** eine Zusammensetzung nach Anspruch 1 auf eine Temperatur >40 °C erwärmt wird.

20. Verwendung der Zusammensetzung nach Anspruch 1 als Umhüllungsmaterial für elektrische oder elektronische Bauteile.

## Claims

1. A composition comprising
(a) at least one strained cycloolefin,
(b) a catalyst for the ring-opening metathesis polymerization of the formula III
(R₂₉R₃₀R₃₁P)ₓL_{y}Me²⁺Z₁⁻Z₂⁻ (III),
in which R₂₉, R₃₀ and R₃₁ are each independently of one another H, C₁-C₂₀alkyl, C₁-C₂₀alkoxy, C₄-C₁₂cycloalkyl or cycloalkoxy, each of which is unsubstituted or substituted by C₁-C₆alkyl, C₁-C₆haloalkyl or C₁-C₆alkoxy, or C₆-C₁₆aryl or C₆-C₁₆aryloxy, each of which is unsubstituted or substituted by C₁-C₆alkyl, C₁-C₆-haloalkyl or C₁-C₆alkoxy, or C₇-C₁₆aralkyl or C₇-C₁₆aralkyloxy, each of which is unsubstituted or substituted by C₁-C₆alkyl, C₁-C-haloalkyl or C₁-C₆alkoxy; R₃₀ and R₃₁ together are tetra- or pentamethylene, each of which is unsubstituted or substituted by C₁-C₆alkyl, C₁-C₆haloalkyl or C₁-C₆alkoxy, or tetra- or penta-methylenedioxyl, or tetra- or pentamethylene each of which is unsubstituted or substituted by C₁-C₆alkyl, C₁-C₆haloalkyl or C₁-C₆alkoxy and which is fused with 1 or 2 1,2-phenylene, or tetra- or penta-methylenedioxyl, or tetramethylenedioxyl which is unsubstituted or substituted by C₁-C₆alkyl, C₁-C₆haloalkyl or C₁-C₆alkoxy and which is fused with 1,2-phenylene in the 1,2- and 3,4-positions, and R₃₁ has the meaning defined above;
L is a neutral ligand, Me is Ru or Os, Z₁⁻ and Z₂⁻ are each a singly charged anion, or Z₁⁻ and Z₂⁻ together are a doubly charged anion,
x is a number from 1 to 3, and y is a number from 0 to 3, where 2 ≤ x+y ≤ 4,
(c) a filler, and
(d) a silane of formula I 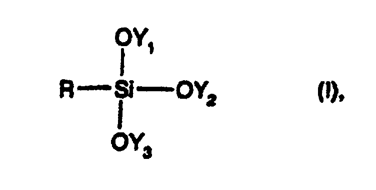 in which R is a monovalent organic group having 2 to 100 carbon atoms, where one or more than one carbon atom can be replaced by O, S, N or Si atoms and where Y₁, Y₂ and Y₃ are each independently of one another C₁-C₂₀alkyl, C₅-C₂₀aryl, C₆-C₂₀aralkyl, C₅-C₁₂cycloalkyl, C₂-C₂₀alkoxyalkyl, or C₁-C₂₀acyl.

2. A composition according to claim 1, comprising as component (a) a compound of formula II 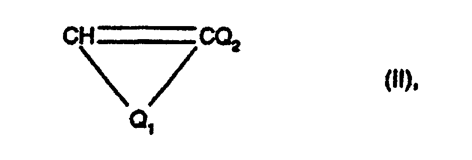 in which Q₁ is a radical containing at least one carbon atom, which forms, together with the -CH=CQ₂ group, an alicyclic ring having at least 3 members, which can contain one or more than one hetero atom selected from the group consisting of silicon, phosphorus, oxygen, nitrogen or sulfur and which is unsubstituted or substituted by halogen, =O, -CN, -NO₂, R₁R₂R₃Si-(O)ᵤ-, -COOM, -SO₃M, -PO₃M, -COO (M₁)_{1/2}, -SO₃(M₁)_{1/2}, -PO₃(M₁)_{1/2}, C₁-C₂₀alkyl, C₁-C₂₀hydroxyalkyl, C₁-C₂₀haloalkyl, C₁-C₆-cyanoalkyl, C₃-C₈cycloalkyl, C₆-C₁₆aryl, C₇-C₁₆aralkyl, C₃-C₆heterocycloalkyl, C₃-C₁₆heteroaryl, C₄-C₁₆heteroaralkyl or R₄-X-; or in which two adjacent carbon atoms are linked via -CO-O-CO- or -CO-NR₅-CO-; or in which an alicyclic, aromatic or heteroaromatic ring is fused to adjacent carbon atoms of the alicyclic ring and is unsubstituted or substituted by halogen, -CN, -NO₂, R₆R₇R₈Si-(O)ᵤ-, -COOM, -SO₃M, -PO₃M, -COO(M₁)_{1/2}, -SO₃(M₁)_{1/2}, -PO₃(M₁)_{1/2}, C₁-C₂₀alkyl, C₁-C₂₀haloalkyl, C₁-C₂₀hydroxyalkyl, C₁-C₆cyanoalkyl, C₃-C₈cycloalkyl, C₆-C₁₆aryl, C₇-C₁₆aralkyl, C₃-C₆heterocycloalkyl, C₃-C₁₆heteroaryl, C₄-C₁₆heteroaralkyl or R₁₃-X₁-; X and X₁ are each independently of the other -O-, -S-, -CO-, -SO-, -SO₂-, -O-CO-, -COO-, -CO-NR₅-, -NR₁₀-CO-, -SO₂-O- or -O-SO₂-; R₁, R₂ and R₃ are each independently of one another C₁-C₁₂alkyl, C₁-C₁₂perfluoroalkyl, phenyl or benzyl; R₄ and R₁₃ are each independently of the other C₁-C₂₀alkyl, C₁-C₂₀haloalkyl, C₁-C₂₀hydroxyalkyl, C₃-C₃cycloalkyl, C₆-C₁₆aryl, C₇-C₁₆aralkyl; R₅ and R₁₀ are each independently of the other hydrogen, C₁-C₁₂alkyl, phenyl or benzyl, the alkyl groups in turn being unsubstituted or substituted by C₁-C₁₂alkoxy or C₃-C₈cycloalkyl; R₆, R₇ and R₈ are each independently of one another C₁-C₁₂alkyl, C₁-C₁₂perfluoroalkyl, phenyl or benzyl; M is an alkali metal and M₁ is an alkaline earth metal; and u is 0 or 1; and where the alicyclic ring formed with Q₁ can contain further non-aromatic double bonds;
Q₂ is hydrogen, C₁-C₂₀alkyl, C₁-C₂₀haloalkyl, C₁-C₁₂alkoxy, halogen, -CN, R₁₁-X₂-; R₁₁ is C₁-C₂₀alkyl, C₁-C₂₀haloalkyl, C₁-C₂₀hydroxyalkyl, C₃-C₈cycloalkyl, C₆-C₁₆aryl or C₇-C₁₆aralkyl; X₂ is -COO- or -CO-NR₁₂-; R₁₂ is hydrogen, C₁-C₁₂alkyl, phenyl or benzyl; the abovementioned cycloalkyl, heterocycloalkyl, aryl, heteroaryl, aralkyl and heteroaralkyl groups being unsubstituted or substituted by C₁-C₁₂alkyl, C₁-C₁₂alkoxy, -NO₂, -CN or halogen, and the hetero atoms of the abovementioned heterocycloalkyl, heteroaryl and heteroaralkyl groups being selected from the group consisting of -O-, -S-, -NR₉- and -N=; and R₉ is hydrogen, C₁-C₁₂alkyl, phenyl or benzyl.

3. A composition according to claim 1, comprising as component (a) norbornene or a norbornene derivative.

4. A composition according to claim 1, comprising as component (a) dicyclopentadiene.

5. A composition according to claim 1, comprising as component (b) a ruthenium(+II) complex salt or an osmium(+II) complex salt.

6. A composition according to claim 1, comprising as component (b) a complex salt of formula III in which R₂₉, R₃₀ and R₃₁ are C₁-C₆alkyl, C₁-C₆alkoxy, C₄-C₁₂cycloalkyl, C₄-C₁₂cycloalkoxy, C₆-C₁₆aryl or C₆-C₁₆aryloxy.

7. A composition according to claim 6, comprising as component (b) a complex salt of formula III in which R₂₉, R₃₀ and R₃₁ are phenyl, tolyl or cyclohexyl.

8. A composition according to claim 1, comprising as component (b) a complex salt of formula III in which L is an arene, heteroarene, nitrile, nitrogen (N₂), alcohol, amine, CO, H₂O or NH₃.

9. A composition according to claim 8, comprising as component (b) a complex salt of formula III in which L is unsubstituted or mono- to tri-C₁-C₄alkyl-substituted benzene, thiophene, benzonitrile, acetonitrile, nitrogen (N₂), an unsubstituted or partially or completely fluorinated C₁-C₄alcohol, CO, H₂O or NH₃.

10. A composition according to claim 1, comprising as component (b) a complex salt of formula III in which Z₁⁻ and Z₂⁻ are independently of the other H⁻, Cl⁻, Br⁻, BF₄⁻, PF₆⁻, SbF₆⁻, AsF₆⁻, CF₃SO₃⁻, C₆H₅-SO₃⁻, p-toluenesulfonate (tosylate), 3,5-dimethylphenylsulfonate, 2,4,6-trimethylphenylsulfonate or 4-trifluoromethylphenylsulfonate or cyclopentadienyl.

11. A composition according to claim 1, comprising as component (b) a ruthenium(+II) complex salt.

12. A composition according to claim 1, comprising as component (c) a metal oxide, metal carbonate, metal sulfate, metal silicate or SiO₂.

13. A composition according to claim 1, comprising as component (c) chalk, Al₂O₃ or SiO₂.

14. A composition according to claim 1, comprising as component (d) a silane of formula I in which R is C₁-C₂₀alkyl, C₅-C₂₀aryl, C₆-C₂₀aralkyl, C₅-C₁₂cycloalkyl, C₂-C₂₀alkoxyalkyl, C₂-C₂₀alkenyl, C₄-C₂₅acryloyloxyalkyl, C₄-C₂₅methacryloyloxyalkyl, C₂-C₂₀aminoalkyl, C₄-C₂₅-glycidyloxyalkyl, C₇-C₂₅epoxycyclohexylalkyl or the radical of a polysiloxane.

15. A composition according to claim 1, comprising as component (d) a silane of formula I in which R is methyl, ethyl, n-octyl, vinyl, 3-mercaptopropyl, 3-aminopropyl, 3-glycidyloxypropyl, 3-acryloyloxypropyl, 3-methylacryloyloxypropyl β-(3,4-epoxycyclohexyl)ethyl, N-(β-aminoethyl)-3-aminopropyl, 3-ureidopropyl, 3-isocycanatopropyl, H₂N-CH₂CH₂NH-CH₂CH₂NH-CH₂CH₂CH₂-, (CH₃O)₃Si-CH₂CH₂CH₂NH-CH₂CH₂CH₂- or a group of formula

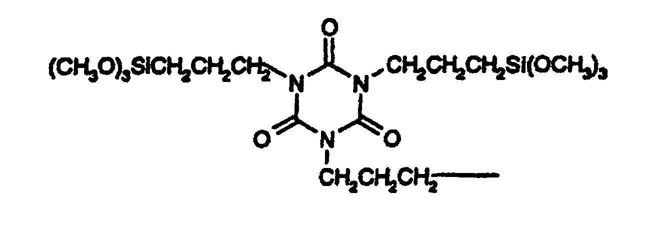

16. A composition according to claim 1, comprising as component (d) a silane of formula I in which R is methyl, vinyl, 3-mercaptopropyl or 3-aminopropyl.

17. A composition according to claim 1, comprising as component (d) a silane of formula 1 in which Y₁, Y₂ and Y₃ are methyl, ethyl, acetyl or 2-methoxyethyl.

18. A composition according to claim 1, containing 15-75% by weight of component (a), 0.001-10.0% by weight of component (b), 20-80% by weight of component (c) and 0.01-20.0% by weight of component (d).

19. A process for the preparation of a metathesis polymer, which comprises heating a composition according to claim 1 to a temperature >40°C.

20. Use of the composition according to claim 1 as encapsulating material for electrical or electronic components.

## Revendications

1. Composition contenant
(a) au moins une cyclooléfine tendue
(b) un catalyseur pour la polymérisation par métathèse décyclisante de formule III
(R₂₉R₃₀R₃₁P)ₓL_{y}Me²⁺Z₁⁻Z₂⁻ (III)
où R₂₉, R₃₀ et R₃₁ représentent, indépendamment les uns des autres, un atome d'hydrogène, des groupes alkyle en C₁-C₂₀, alkoxy en C₁-C₂₀, cycloalkoxy ou cycloalkyle en C₄-C₁₂ non substitué ou substitué par des substituants alkyle en C₁-C₆, haloalkyle en C₁-C₆ ou alkoxy en C₁-C₆, ou aryle en C₆-C₁₆ ou aryloxy en C₆-C₁₆ non substitué ou substitué par des substituants alkyle en C₁-C₆, haloalkyle en C₁-C₆ ou alkoxy en C₁-C₆, aralkyle en C₇-C₁₆ ou aralkyloxy en C₇-C₁₆ non substitué ou substitué par des substituants alkyle en C₁-C₆, haloalkyle en C₁-C₆ ou alkoxy en C₁-C₆ ; les restes R₃₀ et R₃₁ représentent conjointement un groupe tétra- ou penta-méthylènedioxyle, ou tétra- ou pentaméthylène non substitué ou substitué par des substituants alkyle en C₁-C₆, haloalkyle en C₁-C₆ ou alkoxy en C₁-C₆, ou un groupe tétra- ou pentaméthylènedioxyle, ou tétra- ou pentaméthylène non substitué ou substitué par des substituants alkyle en C₁-C₆, haloalkyle en C₁-C₆ ou alkoxy en C₁-C₆ et condensé sur 1 ou 2 groupe 1,2-phénylène, ou un groupe tétra-méthylènedioxyle non substitué ou substitué par des substituants alkyle en C₁-C₆, haloalkyle en C₁-C₆ ou alkoxy en C₁-C₆ et condensé en positions 1,2 et 3,4 sur un groupes 1,2-phénylène, et R₃₁ possède la signification donnée auparavant ; L représente un ligand neutre, Me représente un atome de Ru ou Os, Z₁⁻ et Z₂⁻ représentent chacun un anion à charge simple ou Z₁⁻ et Z₂⁻ conjointement représentent un anion à double charge, x va de 1 à 3 et y va de 0 à 3, où s'applique 2 ≤ x + y ≤ 4.
(c) une charge et
(d) un silane de formule I 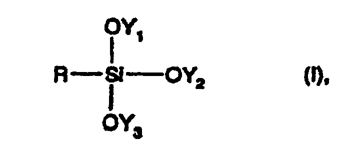
où R représente un groupe organique monovalent présentant 2 à 100 atomes de carbone, un ou plusieurs atomes de carbone pouvant être remplacés par des atomes de O, S, N ou Si et Y₁, Y₂ et Y₃ représentent, indépendamment les uns des autres, des groupes alkyle en C₁-C₂₀, aryle en C₅-C₂₀, aralkyle en C₆-C₂₀, cycloalkyle en C₅-C₁₂, alkoxyalkyle en C₂-C₂₀ ou acyle en C₁-C₂₀.

2. Composition selon la revendication 1, contenant en tant que composant (a) un composé de formule II 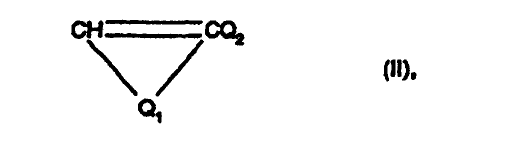 où
Q₁ représente un reste ayant au moins un atome de carbone, qui forme conjointement avec le groupe CH=CQ₂ au moins un cycle alicyclique à trois chainons, qui renferme un ou plusieurs hétéroatomes pris dans le groupe comprenant des atomes de silicium, de phosphore, d'oxygène, d'azote ou de soufre et qui est non substitué ou substitué par des substituants halogène, =O, -CN, -NO₂, R₁R₂R₃Si-(O)ᵤ-, -COOM, -SO₃M, -PO₃M, -COO(M₁)_{1/2}, -SO₃(M₁)_{1/2}, -PO₃(M₁)_{1/2}, alkyle en C₁-C₂₀, hydroxyalkyle en C₁-C₂₀, haloalkyle en C₁-C₂₀, cyanoalkyle en C₁-C₈, cycloalkyle en C₃-C₈, aryle en C₆-C₁₆, aralkyle en C₇-C₁₆, hétérocycloalkyle en C₃-C₆, hétéroaryle en C₃-C₁₆, hétéroaralkyle en C₄-C₁₆ ou R₄-X; ou pour lequel deux atomes de carbone voisins sont reliés par l'intermédiaire de groupes -CO-O-CO- ou -CO-NR₅-CO- ; ou pour lequel, sur des atomes de carbone voisins du cycle alicyclique, est condensé un cycle alicyclique, aromatique ou hétéroaromatique, qui est non substitué ou substitué par des substituants halogène, -CN, -NO₂, R₆R₇R₈Si-(O)ᵤ-, -COOM, -SO₃M, -PO₃M, -COO(M₁)_{1/2}, -SO₃(M₁)_{1/2}, -PO₃(M₁)_{1/2}, alkyle en C₁-C₂₀, haloalkyle en C₁-C₂₀, hydroxyalkyle en C₁-C₂₀, cyanoalkyle en C₁-C₆, cycloalkyle en C₃-C₈, aryle en C₆-C₁₆, aralkyle en C₇-C₁₆, hétérocycloalkyle en C₃-C₆, hétéroaryle en C₃-C₁₆, hétéroaralkyle en C₄-C₁₆ ou R₁₃-X₁ ; X et X₁ représentent indépendamment l'un de l'autre, des groupes -O-, -S-, -CO-, -SO-, -SO₂-, -O-CO-, -COO-, -CO-NR₅-, -NR₁₀-CO-, -SO₂-O- ou -O-SO₂- ; R₁, R₂ et R₃ représentent, indépendamment les uns des autres, des groupes alkyle en C₁-C₁₂, perfluoroalkyle en C₁-C₁₂, phényle ou benzyle ; R₄ et R₁₃ représentent, indépendamment l'un de l'autre, des groupes alkyle en C₁-C₂₀, haloalkyle en C₁-C₂₀, hydroxyalkyle en C₁-C₂₀, cycloalkyle en C₃-C₈, aryle en C₆-C₁₆, aralkyle en C₇-C₁₆ ; R₅ et R₁₀ représentent, indépendamment l'un de l'autre, un atome d'hydrogène, des groupes alkyle en C₁-C₁₂, phényle ou benzyle, les groupes alkyles, de leur côté, peuvent être non substitués ou substitués par des substituants alkoxy en C₁-C₁₂, cycloalkyle en C₃-C₈ ; R₆, R₇ et R₈ représentent, indépendamment les uns des autres, des groupes alkyle en C₁-C₁₂, perfluoroalkyle en C₁-C₁₂, phényle ou benzyle ; M représente un métal alcalin et M₁ représente un métal alcalino-terreux ; et u vaut 0 ou 1 ; le cycle alicyclique formé avec Q₁ peut contenir d'autres doubles liaisons non aromatiques ;
Q₂ représente un atome d'hydrogène, des groupes alkyle en C₁-C₂₀, haloalkyle en C₁-C₂₀, alkoxy en C₁-C₁₂, halogène, -CN, R₁₁-X₂- ; R₁₁ représente des groupes alkyle en C₁-C₂₀, haloalkyle en C₁-C₂₀, hydroxyalkyle en C₁-C₂₀, cycloalkyle en C₃-C₈, aryle en C₆-C₁₆ ou aralkyle en C₇-C₁₆ ; X₂ représente des groupes -COO- ou -CO-NR₁₂- ; R₁₂ représente un atome d'hydrogène, des groupes alkyle en C₁-C₁₂, phényle ou benzyle ; les groupes cycloalkyle, hétérocycloalkyle, aryle, hétéroaryle, aralkyle et hétéroaralkyle précités sont non substitués ou substitués par des substituants alkyle en C₁-C₁₂, alkoxy en C₁-C₁₂, -NO₂, -CN ou halogène, et les hétéroatomes des groupes hétérocycloalkyle, hétéroaryle et hétéroaralkyle sont pris dans le groupe comprenant des groupes -O-, -S-, -NR₉- et -N= ; et R₉ représente un atome d'hydrogène, des groupes alkyle en C₁-C₁₂, phényle ou benzyle.

3. Composition selon la revendication 1, contenant en tant que composant (a) le norbornène ou un dérivé du norbornène.

4. Composition selon la revendication 1, contenant en tant que composant (a) le dicyclopentadiène.

5. Composition selon la revendication 1, contenant en tant que composant (b) un sel complexe de ruthénium (+II) ou un sel complexe d'osmium (+II).

6. Composition selon la revendication 1, contenant en tant que composant (b) un sel complexe de formule III, où R₂₉, R₃₀ et R₃₁ représentent des groupes alkyle en C₁-C₆, alkoxy en C₁-C₆, cycloalkyle en C₄-C₁₂, cycloalkoxy en C₄-C₁₂, aryle en C₆-C₁₆ ou aryloxy en C₆-C₁₆.

7. Composition selon la revendication 6, contenant en tant que composant (b) un sel complexe de formule III, où R₂₉, R₃₀ et R₃₁ représentent des groupes phényle, tolyle ou cyclohexyle.

8. Composition selon la revendication 1, contenant en tant que composant (b) un sel complexe de formule III, où L représente des groupes arène, hétéroarène, nitrile, azote (N₂), alcool, amine, CO, H₂O ou NH₃.

9. Composition selon la revendication 8, contenant en tant que composant (b) un sel complexe de formule III, où L représente des groupes azote (N₂), acétonitrile, benzonitrile, thiophène, benzène non substitué ou substitué par 1 à 3 substituants alkyle en C₁-C₄, des groupes NH₃, H₂O, CO, alcool en C₁-C₄ non substitué ou partiellement ou complètement fluoré.

10. Composition selon la revendication 1, contenant en tant que composant (b) un sel complexe de formule III, où Z₁⁻ et Z₂⁻ représentent indépendamment l'un de l'autre des groupes H⁻, Cl⁻, Br⁻, BF₄⁻, PF₆⁻, SbF₆⁻, AsF₆⁻, CF₃SO₃⁻, C₆H₅-SO₃⁻, p-toluènesulfonate (tosylate), 3,5-dilméthylphényl-sulfonate, 2,4,6-triméthylphényl-sulfonate ou 4-trifluorométhylphényisulfonate ou cyclopentadiényle.

11. Composition selon la revendication 1, contenant en tant que composant (b) un sel complexe de ruthénium(+II).

12. Composition selon la revendication 1, contenant en tant que composant (c) un oxyde, un carbonate, un sulfate, un silicate de métal ou SiO₂.

13. Composition selon la revendication 1, contenant en tant que composant (c) la craie, Al₂O₃ ou SiO₂.

14. Composition selon la revendication 1, contenant en tant que composant (d) un silane de formule I, où R représente des groupes alkyle en C₁-C₂₀, aryle en C₅-C₂₀, aralkyle en C₆-C₂₀, cycloalkyle en C₅-C₁₂, alkoxyalkyle en C₂-C₂₀, alcényle en C₂-C₂₀, acryloxyalkyle en C₄-C₂₅, méthacryloxyalkyle en C₄-C₂₅, aminoalkyle en C₂-C₂₀, glycidyloxyalkyle en C₄-C₂₅, époxycyclohexylalkyle en C₇-C₂₅ ou un reste d'un polysiloxane.

15. Composition selon la revendication 1, contenant en tant que composant (d) un silane de formule I, où R représente des groupes méthyle, éthyle, n-octyle, vinyle, 3-mercaptopropyle, 3-aminopropyle, 3-glycidyloxypropyle, 3-acryloxypropyle, 3-méthacryloxypropyle, β-(3,4-époxycyclohexyl)éthyle, N-(β-aminoéthyl)-3-aminopropyle, 3-uréidopropyle, 3-isocyanatopropyle, H₂N-CH₂CH₂NHCH₂CH₂NH-CH₂CH₂CH₂-, (CH₃O)₃Si-CH₂CH₂CH₂NH-CH₂CH₂CH₂- ou un groupe de formule

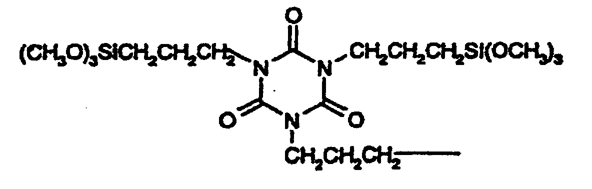

16. Composition selon la revendication 1, contenant en tant que composant (d) un silane de formule I, où R représente des groupes méthyle, vinyle, 3-mercaptopropyle ou 3-aminopropyle.

17. Composition selon la revendication 1, contenant en tant que composant (d) un silane de formule I, où Y₁, Y₂ et Y₃ représentent des groupes méthyle, éthyle, acétyle ou 2'-méthoxyéthyle.

18. Composition selon la revendication 1, contenant de 15 à 75 % en poids du composant (a), de 0,001 à 10,0 % en poids du composant (b), de 20 à 80 % en poids du composant (c) et de 0,01 à 20,0 % en poids du composant (d).

19. Procédé pour la préparation d'un polymère par métathèse **caractérisé en ce qu'**on chauffe une composition selon la revendication 1 à une température >40°C.

20. Utilisation de la composition selon la revendication 1 en tant que matière d'enrobage de composants électriques ou électroniques.
